# EUROPEAN PATENT APPLICATION

(11) **EP 4 478 095 A1**
(43) Date of publication of application: **18.12.2024**
(21) Application number: 23854613.9
(22) Date of filing: 17.08.2023
(51) Int. Cl.: G02B 1/111, B32B 27/08, G02F 1/1335, B32B 7/12, B32B 7/023, B32B 27/18

(54) **RESIN FILM, METHOD FOR MANUFACTURING RESIN FILM, DISPLAY DEVICE, OPTICAL MEMBER, AND POLARIZING MEMBER**

(30) Priority: 18.08.2022 JP 2022130694; 12.07.2023 JP 2023114734
(71) Applicant: Samsung Electronics Co., Ltd, Suwon-si, Gyeonggi-do 16677 (KR)
(72) Inventor: GOTO, Yuichiro, Yokohama-shi, Kanagawa 230--0027 (JP); OHYAMA, Tsuyoshi, Yokohama-shi, Kanagawa 230--0027 (JP); YOKOTE, Yoshihiro, Yokohama-shi, Kanagawa 230--0027 (JP); JANG, Naewon, Suwon-si Gyeonggi-do 16677 (KR); CHO, Byoungjin, Suwon-si Gyeonggi-do 16677 (KR); KIM, Seunggi, Suwon-si Gyeonggi-do 16677 (KR)
(74) Representative: Gulde & Partner
(86) International application number: PCT/IB2023/058241
(87) International publication number: WO 2024/038397

(57) **Abstract**

Disclosed is a resin film or the like that has both good anti-glare property and clarity. The resin film includes an anti-glare layer and a low refractive index layer. The low refractive index layer is stacked on the anti-glare layer. In addition, the low refractive index layer has a refractive index of 1.40 or less. The anti-glare layer includes scattering particles and a binder. The scattering particles have irregularities formed on a surface thereof. The binder is made of a resin that disperses the scattering particles. In addition, the anti-glare layer includes a flat portion and a protrusion. In the protrusion, the scattering particles protrude from the flat portion 16a.

## Description

### Technical Field

Apparatuses and methods consistent with the disclosure relate to a resin film or the like. More specifically, the present disclosure relates to a resin film or the like provided on a surface of a display means of a display device.

### Description of the Related Art

Display devices such as a liquid crystal display (LCD) and a plasma display panel (PDP) are known. In addition, display devices such as an electroluminescence display (ELD) and a field emission display (FED) are known. In these display devices, visibility of an image is increasing by providing an anti-reflection member on an image display surface.

As the anti-reflection member, there exists one in which an anti-reflection layer such as a low refractive index layer is stacked on an anti-glare layer having an uneven shape.

Patent Document 1 discloses an anti-glare anti-reflection member having an anti-glare layer and a low refractive index layer provided on a substrate. In this anti-glare anti-reflection member, the anti-glare layer is a layer including a binder resin and particles and having an uneven shape. In addition, in this anti-glare anti-reflection member, the low refractive index layer has a thin film thickness on a convex portion of the anti-glare layer, while a film thickness on a flat portion is thick. In addition, when the film thickness of the low refractive index layer is defined as Δd, a value of Δd is in the range of 7.0 nm or more and 40.0 nm or less.

Patent Document 2 discloses an optical laminate having a low refractive index layer (anti-reflection layer) laminated on an anti-glare layer. In this optical laminate, in order to suppress a reflectance in a low wavelength region, skewness Rsk of a surface of the anti-glare layer and a surface of the low refractive index layer is set to less than 0, and a surface shape of the anti-glare layer and the low refractive index layer are set to be a surface shape (shape with few thin, long, and steep mountains) having many valleys and long, thin, and steep valleys.

Patent Document 3 discloses an anti-glare/anti-reflection member in which an anti-glare layer having an uneven structure and an anti-glare function and an anti-reflection layer are stacked on a surface layer of a substrate. In the anti-glare/anti-reflection member, the anti-reflection layer composed of a multilayer film in which a low-refractive index layer and a high-refractive index layer are alternately laminated on the anti-glare layer by a sputter deposition method or a chemical vapor deposition (CVD) method is formed.

### SUMMARY

In order to increase the anti-glare property of the resin film including the anti-glare layer and the low refractive index layer and to suppress the reflection of external light or the like on the display means, it is preferable to increase unevenness on the surface of the anti-glare layer. On the other hand, when the unevenness of the surface of the anti-glare layer is large, the coatability of the low refractive index layer laminated on the anti-glare layer may deteriorate, and it may become difficult to obtain the low refractive index layer having the uniform thickness. In this case, the image displayed on the display means becomes white and blurred, and thus, the clarity may deteriorate.

The disclosure provides a resin film or the like that has both good anti-glare property and clarity.

According to an embodiment of the disclosure, a resin film may include an anti-glare layer and a low refractive index layer. The low refractive index layer may be laminated on the anti-glare layer. In addition, the low refractive index layer may have a refractive index of 1.40 or less. In addition, the anti-glare layer may include scattering particles and a binder. The scattering particle may have unevenness formed on a surface thereof. The binder may be made of a resin that disperses the scattering particle. In addition, the anti-glare layer may include a flat portion and a protrusion. In the protrusion, the scattering particle may protrude from the flat portion.

Here, when viewed from a direction in which the low refractive index layer is laminated, the anti-glare layer may have a ratio (area of the flat portion/area of the protrusion) of an area of the flat portion to an area of the protrusion of 2.0 or more and 30 or less.

In addition, the scattering particle may have an average particle size of 1 µm or more and 10 µm or less.

In addition, the scattering particle may have a specific surface area calculated by a Brunauer-Emmett-Teller (BET) method of 5 m²/g or more.

In addition, the scattering particle may have a particle size of 20 µm or more and a particle ratio of 1 mass% or less.

In addition, the scattering particle may have a coefficient of variation of a grain-size distribution of 30% or less.

In addition, the scattering particle may include a plurality of particles with different average particle sizes.

In addition, the scattering particle may have a difference in average particle size of a plurality of particles of 2.0 µm or less.

In addition, the anti-glare layer may have a difference between the refractive index of the binder and the refractive index of the scattering particles of 0.15 or less.

In addition, in the anti-glare layer, an interface between the binder and the scattering particle may be compatible.

In addition, the anti-glare layer may have a refractive index of the binder of 1.50 or more and 1.60 or less.

In addition, the anti-glare layer may have a refractive index of the scattering particle of 1.44 or more and 1.60 or less.

In addition, the scattering particle may include at least one of silica particles, polymethyl methacrylate (PMMA) particles, melamine particles, and acetylcellulose particles.

In addition, the scattering particle may include silicon particles.

In addition, the anti-glare layer may further include nanoparticles with an average particle size of 100 nm or less.

In addition, the anti-glare layer may further include particles that do not protrude from the binder.

In addition, the low refractive index layer may have a refractive index of 1.34 or less.

In addition, the low refractive index layer may include hollow particles and a resin. The resin may disperse the hollow particles.

In addition, the average film thickness of the low refractive index layer may be 80 nm or more and 120 nm or less.

In addition, the high refractive index layer may be further provided between the anti-glare layer and the low refractive index layer. The high refractive index layer may have a refractive index of 1.60 or more.

In addition, an external haze value may be set to 20% or more.

In addition, an internal haze value may be set to 15% or less.

In addition, a gross value measured at an incident angle of 60° from the low refractive index layer side may be 10 or less.

In addition, a gross value measured at an incident angle of 85° from the low refractive index layer side may be 50 or less.

According to another embodiment of the disclosure, a resin film includes an anti-glare layer and a low refractive index layer. The low refractive index layer may be laminated on the anti-glare layer. In addition, the low refractive index layer may have a refractive index of 1.40 or less. The anti-glare layer may have a flat portion and a protrusion protruding from the flat portion. In addition, when viewed from a direction in which the low refractive index layer is laminated, the anti-glare layer may have a ratio (area of the flat portion/area of the protrusion) of an area of the flat portion to an area of the protrusion of 2.0 or more and 30 or less. In addition, a surface roughness of the anti-glare layer in the protrusion may be greater than that in the flat portion.

In addition, according to another embodiment of the disclosure, a method of manufacturing a resin film includes a process of manufacturing an anti-glare layer and a process of manufacturing a low refractive index layer. The process of manufacturing an anti-glare layer may use scattering particles and a binder to manufacture an anti-glare layer having a flat portion and a protrusion. The scattering particle may have unevenness formed on a surface thereof. The binder may be made of a resin that disperses the scattering particle. In the protrusion, the scattering particle may protrude from the flat portion. In the process of manufacturing a low refractive index layer, the low refractive index layer having a refractive index of 1.40 or less may be manufactured.

Here, in the manufacturing of the low refractive index layer, the low refractive index layer may be manufactured into a film using a wet coating method.

In addition, according to the present disclosure, a display device disclosure includes a display means that displays an image, and the resin film provided on a surface of the display means.

In addition, according to the present disclosure, an optical member may include a substrate and a resin film provided on the substrate.

Here, the substrate may have a maximum internal haze value of 0.5% or less in a visible light wavelength region.

In addition, according to the present disclosure, a polarizing member may include a polarizing means for polarizing light, and the resin film provided on the polarizing means.

### Effect of the invention

According to various exemplary embodiments of the disclosure as described above, it is possible to provide a resin film or the like that has both good anti-glare property and clarity.

### BRIEF DESCRIPTION OF THE DRAWING FIGURES

FIG. 1A is a diagram describing a display device to which the present embodiment is applied. FIG. 1B is a cross-sectional view taken along line Ib-Ib in FIG. 1A, and illustrates an example of a configuration of a liquid crystal panel to which the present embodiment is applied;
FIG. 2 is a diagram illustrating an anti-reflection film, and is a cross-sectional view of the anti-reflection film cut along a stacking direction of each layer;
FIG. 3 is an enlarged view of an anti-glare layer in the anti-reflection film;
FIGS. 4A and 4B are diagrams illustrating modified examples of the anti-reflection film;
FIGS. 5A and 5B are diagrams describing other forms of an anisotropic diffusion layer;
FIG. 6 is a diagram illustrating another modified example of the anti-reflection film;
FIGS. 7A and 7B are diagrams illustrating a configuration example of a polarizing plate to which the present embodiment is applied; and
FIG. 8A is a flowchart illustrating an example of a method of manufacturing an anti-reflection film, and FIG. 8B is a flowchart illustrating a method of manufacturing an anti-glare layer and a low refractive index layer in an anti-reflection film.

### DETAILED DESCRIPTION OF THE EXEMPLARY EMBODIMENTS

Hereinafter, modes for carrying out the present disclosure will be described in detail. In addition, the present disclosure is not limited to the following embodiments. Also, the present disclosure may be implemented with various modifications within the scope of its gist. In addition, the drawings used are for explaining the present embodiment and do not illustrate the actual size.

### <Description of Display Device 1>

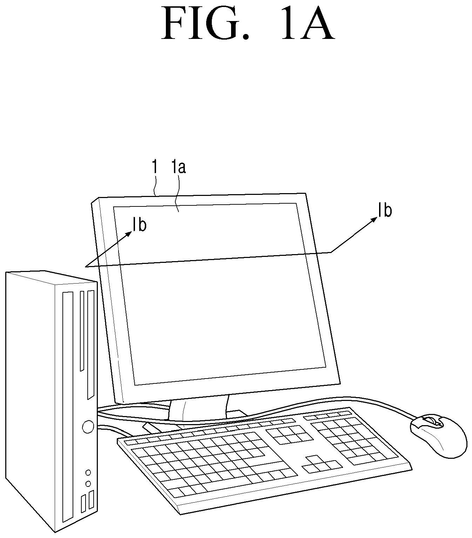

FIG. 1A is a diagram describing a display device 1 to which the present embodiment is applied.

The display device 1 illustrated is, for example, a liquid crystal display for a personal computer (PC), a liquid crystal TV, or the like. The display device 1 displays an image on a liquid crystal panel 1a.

### <Description of Liquid Crystal Panel 1a>

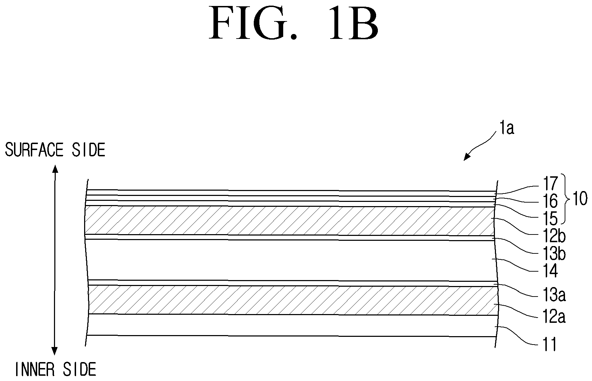

FIG. 1B is a cross-sectional view taken along line Ib-Ib in FIG. 1A, and illustrates an example of a configuration of the liquid crystal panel 1a to which the present embodiment is applied.

The liquid crystal panel 1a is an example of display means that displays an image. The liquid crystal panel 1a of the present embodiment is, for example, a VA type liquid crystal panel. The liquid crystal panel 1a illustrated has a backlight unit 11 and a polarizing film 12a. In addition, the liquid crystal panel 1a has a retardation film 13a, a liquid crystal 14, a retardation film 13b, and a polarizing film 12b. In addition, the liquid crystal panel 1a has an anti-reflection film 10. They have a structure in which they are laminated in this order from the inner side of the liquid crystal panel 1a toward the surface side. In addition, hereinafter, when the polarizing film 12a and the polarizing film 12b are not distinguished, they may simply be referred to as the polarizing film 12. Similarly, when the retardation film 13a and the retardation film 13b are not distinguished, they may simply be referred to as the retardation film 13.

In addition, as will be described in detail later, the anti-reflection film 10 has a structure in which a substrate 15, an anti-glare layer 16, and a low refractive index layer 17 are laminated in this order from the inner surface of the liquid crystal panel 1a toward the surface side. In the present embodiment, a laminate of the anti-glare layer 16 and the low refractive index layer 17 in the anti-reflection film 10 is an example of a resin film. In addition, the anti-reflection film 10 including the substrate 15 in addition to the anti-glare layer 16 and the low refractive index layer 17 is also an example of a resin film.

The backlight unit 11 irradiates light to the liquid crystal 14. The backlight unit 11 has a light source such as a cold cathode fluorescent lamp, a white light emitting diode (LED), or a blue LED. In addition, the backlight unit 11 may have a diffusion sheet or prism sheet that controls light uniformity, a quantum dot color conversion sheet that controls color, etc.

The polarizing films 12a and 12b are examples of polarizing means that polarize light. Polarization directions of the polarizing films 12a and 12b are orthogonal to each other. The polarizing films 12a and 12b include, for example, a resin film including iodine compound molecules in poly-vinyl alcohol (PVA). Then, the polarizing films 12a and 12b are adhered by having a resin film made of triacetylcellulose (TAC) inserted therebetween. Light is polarized by including the iodine compound molecules.

The retardation films 13a and 13b compensate for viewing angle dependence of a liquid crystal panel 1a. The light that transmits the liquid crystal 14 changes in polarization form from linearly polarized light to elliptically polarized light. For example, when displaying black, the liquid crystal panel 1a appears black when viewed from a vertical direction. Meanwhile, when the liquid crystal panel 1a is viewed diagonally, a phase difference occurs in the liquid crystal 14. In addition, an axis of the polarizing film 12 is not 90°. As a result, there is a problem in that a leakage phenomenon of light occurs and thus a contrast deteriorates. In other words, the viewing angle dependence occurs on the liquid crystal panel 1a. The retardation films 13a and 13b have the function of returning this elliptically polarized light to the linearly polarized light. As a result, the retardation films 13a and 13b may compensate for the viewing angle dependence of the liquid crystal panel 1a.

A power source (not illustrated) is connected to the liquid crystal 14, and when a voltage is applied by this power supply, an alignment direction of the liquid crystal 14 changes. As a result, the liquid crystal 14 controls a transmission state of light.

In the case of a VA type liquid crystal panel, when no voltage is applied to the liquid crystal 14 (voltage OFF), the liquid crystal molecules are aligned in a vertical direction in the drawings. When light is irradiated from the backlight unit 11, first, light passes through the polarizing film 12a and is polarized. The polarized light passes through the liquid crystal 14 as it is. In addition, the polarizing film 12b has different polarization directions, and therefore, blocks the polarized light. In this case, a user viewing the liquid crystal panel 1a may not visually recognize this light. In other words, when no voltage is applied to the liquid crystal 14, the color of the liquid crystal becomes 'black'.

On the other hand, when a maximum voltage is applied to the liquid crystal 14, the liquid crystal molecules are aligned in the horizontal direction in the drawings. The direction of the polarized light that has passed through the polarizing film 12a rotates by 90° due to the action of the liquid crystal 14. Therefore, the polarizing film 12b transmits the polarized light without blocking the polarized light. In this case, the user viewing the liquid crystal panel 1a may visually recognize this light. In other words, when the maximum voltage is applied to the liquid crystal 14, the color of the liquid crystal becomes "white." In addition, a voltage may be set between the voltage OFF and the maximum voltage. In this case, the liquid crystal 14 is in a state between an up and down direction in the drawing and the vertical direction with respect to the up and down direction in the drawing. That is, the liquid crystal 14 is aligned in a diagonal direction that intersects both the up and down direction and the vertical direction. In this state, the color of the liquid crystal becomes `gray.' Therefore, by adjusting the voltage applied to the liquid crystal 14 from OFF to the maximum voltage, it is possible to express intermediate gray levels in addition to black and white. As a result, the liquid crystal panel 1a displays an image.

In addition, although not illustrated, a color image may be displayed by using a color filter.

### <Description of Anti-reflection Film 10>

Next, each layer constituting the anti-reflection film 10 will be described.

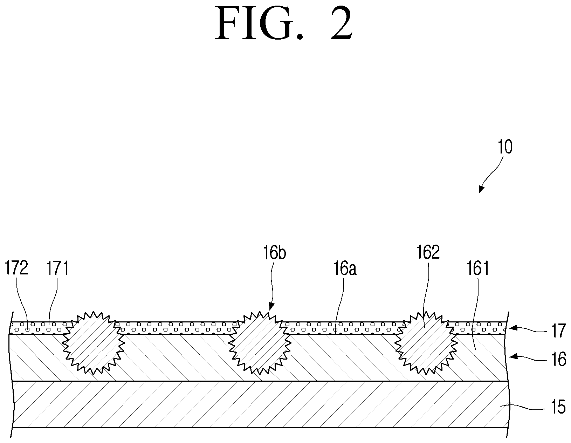

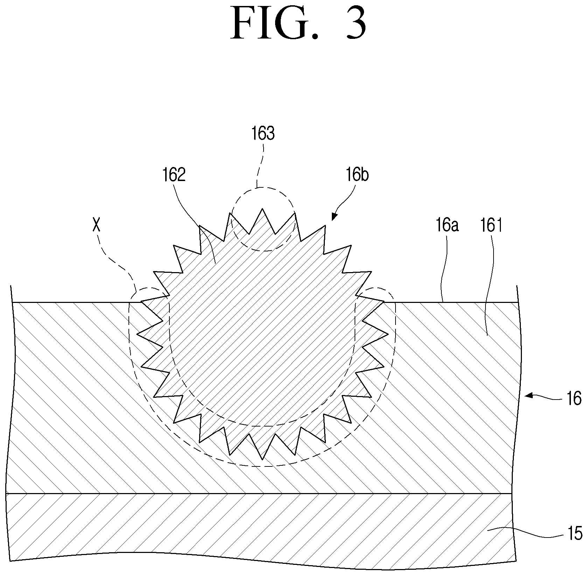

FIG. 2 is a diagram illustrating the anti-reflection film 10, and is a cross-sectional view of the anti-reflection film 10 cut along a stacking direction of each layer. FIG. 3 is an enlarged view of the anti-glare layer 16 in the anti-reflection film 10.

As described above, the anti-reflection film 10 is provided on the polarizing film 12b (see FIG. 1) of the liquid crystal panel 1a (see FIG. 1). The anti-reflection film 10 includes the substrate 15, the anti-glare layer 16 laminated on the substrate 15, and the low refractive index layer 17 laminated on the anti-glare layer 16.

### <Description of Substrate 15>

The substrate 15 is a support for forming the anti-glare layer 16 and the low refractive index layer 17. The substrate 15 is preferably a material with a high light transmittance, and is preferably a transparent substrate with a total light transmittance of 85% or more. As the substrate 15, for example, triacetylcellulose (TAC) is used. In addition, the substrate 15 is not limited to these, and polyethylene terephthalate (PET), polymethyl methacrylate (PMMA), cycloolefin polymer (COP), etc., may also be used. In addition, when using the PET as the substrate 15, a super reflection film (SRF), which is a film obtained by stretching PET to have a large birefringence, may be used. However, in this embodiment, a film made of TAC or PET may be more preferably used as the substrate 15 from the viewpoint of suppressing the occurrence of coloring unevenness and moire when attached to the polarizing film 12b. The substrate 15 has a thickness of, for example, 20 µm or more and 200 µm or less. In addition, in order to ensure adhesion to the anti-glare layer 16, an easily adhesive layer may be formed on the surface of the substrate 15. When the easily adhesive layer is formed on the surface of the substrate 15, it is preferable that the difference between the refractive index of the easily adhesive layer and the refractive index of the binder 161 of the anti-glare layer 16, which will be described later, is small.

In addition, an upper limit of an internal haze value of the substrate 15 in a visible light region (wavelength range from 380 nm or more to 780 nm or less) is preferably 0.8% or less, more preferably 0.5 or less, and even more preferably 0.3% or less. In addition, a lower limit of an internal haze value in the visible light region of the substrate 15 is not particularly limited, but is preferably 0.05% or more, for example. When the internal haze value in the visible light region of the substrate 15 is high, there is a risk that specular component excluded (SCE) of the anti-reflection film 10 increases, and specular component include (SCI) or reflection chromaticity a*/b* of the anti-reflection film 10 deteriorates. This tendency becomes particularly noticeable when highly scattering particles (scattering particles 162 to be described later) are used in the anti-glare layer 16. In addition, the SCE of the anti-reflection film 10 is a reflectance excluding a regular reflection component of the anti-reflection film 100.

The internal haze value of the substrate 15 may be obtained, for example, by measuring the haze when glass inserted into the substrate 15 through a liquid close to the refractive index of the substrate 15. In addition, the wavelength dependence of the internal haze value of the substrate 15 may be measured using a spectroscopic haze meter (for example, SH7000 manufactured by NIPPON DENSHOKU INDUSTRIES CO., LTD).

### <Description of Anti-glare Layer 16>

The anti-glare layer 16 is a layer for increasing the anti-glare properties of the anti-reflection film 10 by scattering light from the outside and suppressing reflection of light onto the liquid crystal panel 1a.

The anti-glare layer 16 of the present embodiment includes a binder 161 and scattering particles 162. As will be described in detail below, the anti-glare layer 16 can be formed, for example, with an application solution including the binder 161 and the scattering particles 162. In addition, the anti-glare layer 16 includes, in addition to the binder 161 and the scattering particles 162, additives such as a polymerization initiator, a chain transfer agent, a leveling agent, an anti-foaming agent, a surface modifier, an ultraviolet absorber, an adhesive, an antioxidant, and a flame retardant.

As illustrated in FIGS. 2 and 3, the anti-glare layer 16 of the present embodiment includes a flat portion 16a that is mainly made of the binder 161 and has a flat surface shape, and a protrusion 16b formed by protruding a portion of the scattering particles 162 from the surface of the flat portion 16a. In addition, the protrusion 16b protrudes upward from the surface of the flat portion 16a, that is, toward the surface of the liquid crystal panel 1a in the drawing.

The binder 161 includes a resin that disperses scattering particles. As the resin constituting the binder 161, a curable resin may be used. Among the curable resins, it is preferable to use a photocurable resin from the viewpoint of increasing the mechanical strength of the anti-glare layer 16 and obtaining good optical characteristics.

Examples of the photocurable resin include a (meth)acrylic resin, a urethane resin, a (meth)acrylic urethane resin, an epoxy resin, a silicone resin, etc. More specifically, these photopermeable resins include compounds having one or more unsaturated bonds. Examples of the compounds having an unsaturated bond of 1 may include ethyl (meth)acrylate, ethylhexyl (meth)acrylate, styrene, methyl styrene, N-vinylpyrrolidone, etc. Examples of the compounds having a plurality of unsaturated bonds may include polymethylolpropane tri(meth)acrylate, tripropylene glycol di(meth)acrylate, diethylene glycol di(meth)acrylate, pentaerythritol tri(meth)acrylate, pentaerythritol tetra(meth)acrylate, dipentaerythritol hexa(meth)acrylate, dipentaerythritol penta(meth)acrylate, 1,6-hexanediol di(metal)acrylate, neopentyl glycol di(metal)acrylate, etc. In addition, examples of the oligomer having a plurality of unsaturated bonds may include urethane (meth)acrylate, epoxy (meth)acrylate, polyether (meth)acrylate, polyester (meth)acrylate, etc. These may be used alone or in combination.

In addition, as the resin of the binder 161, the same resin as the resin exemplified as the binder 171 of the low refractive index layer 17 described later may be used.

The refractive index of the binder 161 is preferably 1.50 or more, and more preferably 1.55 or more. In addition, the refractive index of the binder 161 is preferably 1.60 or less.

In addition, as will be described in detail below, it is preferable that the difference between the refractive index of the binder 161 and the refractive index of the scattering particles 162 is small.

As illustrated in FIG. 3, the scattering particles 162 exist in a state protruding from the flat portion 16a mainly composed of the binder 161. Due to this protruding shape, light from the outside is scattered. In addition, the scattering particles 162 have unevenness 163 formed on a surface thereof. Due to the unevenness 163 formed on the surface of the scattering particles 162, the light from the outside is more likely to be scattered.

An average particle size of the scattering particles 162 is set to a range where, in the anti-glare layer 16, a portion of the scattering particles 162 protrudes from the surface of the flat portion 16a formed by the binder 161 to form the protrusion 16b. Therefore, the average particle size of the scattering particles 162 varies depending on the amount of the scattering particles 162 mixed with the binder 161, the thickness of the flat portion 16a, etc., but is, may be, for example, 1 µm or more and 10 µm or less. When the average particle size of the scattering particles 162 is less than 1 µm, it becomes difficult for the scattering particles 162 to protrude from the surface of the flat portion 16a, and the effect of suppressing the reflection phenomenon due to light scattering by the protrusion 16b is likely to be insufficient. Meanwhile, when the average particle size of the scattering particles 162 exceeds 10 ,um, the area of the protrusion 16b in the anti-glare layer 16 increases, so that there is a risk that the coatability of the low refractive flow layer 17 with respect to the anti-glare layer 16 decreases.

In addition, it is preferable that the scattering particles 162 do not include coarse particles. Specifically, the scattering particles 162 have preferably 1 mass% or less of particles with a particle size of 20 µm or more, more preferably 0.5 mass% or less of particles with a particle size of 16 µm or more, and even more preferably 0.2 mass% or less of particles with a particle size of 12 µm or more. When the scattering particles 162 include a large number of coarse particles, the coatability of the low refractive index layer 17 with respect to the anti-glare layer 16 decreases, and appearance defects in the form of spots centered on coarse particles are likely to occur in the low refractive index layer 17. The grain-size distribution of the scattering particles 162 may be measured using a Coulter counter, etc.

In addition, the scattering particles 162 preferably have a narrow grain-size distribution. Specifically, a coefficient of variation (CV value) when measuring the grain-size distribution of the scattering particles 162 is preferably 35% or less, more preferably 30% or less, and even more preferably 25% or less. There is no particular limitation on the lower limit of the coefficient of variation, but for example, it is preferably 5% or more. When the coefficient of variation of the grain-size distribution of the scattering particles 162 exceeds 35%, the unevenness of the surface of the anti-glare layer 16 including the scattering particles 162 becomes non-uniform. In this case, the coatability of the low refractive index layer 17 with respect to the anti-glare layer 16 decreases, and the coating defects in the form of spots are likely to occur when the low refractive index layer 17 is coated. In addition, when the coefficient of variation of the grain-size distribution of the scattering particles 162 exceeds 35%, the wear resistance of the surface of the anti-reflection film 10 is likely to decrease.

In addition, the anti-glare layer 16 may include two or more types of scattering particles 162 with different average particle sizes. In addition, the anti-glare layer 16 may include other particles that have an average particle size different from the scattering particles 162 and do not have unevenness 163 formed on the surface, in addition to the scattering particles 162.

When the anti-glare layer 16 includes two or more types of particles with different average particle sizes, the difference in average particle size between the particles is preferably 3.5 µm or less, more preferably 2.0 µm or less, and even more preferably 1.5 µm or less. In addition, when the anti-glare layer 16 includes two or more types of particles with different average particle sizes, the difference in average particle size between the particles is preferably 0.5 µm or more, and more preferably 1.0 µm or more. By setting the difference in average particle size to be within the above range, the anti-glare properties may be improved without causing deterioration of SCI of the anti-reflection film 10. In addition, the reflection chromaticity of the anti-reflection film 10 may decrease.

In addition, in the description of this embodiment, the average particle size refers to the number average primary particle size. It is possible to measure the average primary particle size of the scattering particles 162 by an observation image using a scanning electron microscope (SEM), a transmission electron microscope (TEM), and a scanning transmission electron microscope (STEM) of the dried film of the particle dispersion liquid in which the scattering particles 162 are dispersed. In addition, since the scattering particles 162 have the unevenness 163 on the surface, the average primary particle size is measured by approximating the convex portion of the unevenness 163 on the surface of the scattering particles 162 to an outer circumferential surface of the scattering particles 162.

The surface roughness of the unevenness 163 formed on the surface of the scattering particles 162, that is, the surface roughness in the protrusion 16b of the anti-glare layer 16 is greater than the surface roughness of the flat portion 16a of the anti-glare layer 16.

In addition, the smaller the surface roughness Ra of the flat portion 16a, the more preferable it is, from the viewpoint of improving the coatability of the low refractive index layer 17 to the flat portion 16a.

The surface roughness of the flat portion 16a and the protrusion 16b may be measured using an atomic force microscope (AFM) or the like.

The unevenness 163 formed on the surface of the scattering particles 162 may be measured by a specific surface area of the scattering particles 162. The more complex the shape of the unevenness 163 formed on the surface of the scattering particles 162 and the greater the scattering of light by the unevenness 163, the larger the specific surface area of the scattering particles 162. In the present embodiment, the specific surface area of the scattering particles 162 is preferably 5 m²/g or more, more preferably 50 m²/g or more, and still more preferably 80 m²/g or more. In addition, the upper limit of the specific surface area of the scattering particles 162 is not specifically defined, but may be 500 m²/g or less. When the scattering particles 162 with a specific surface area of less than 5 m²/g are used, a large amount of scattering particles 162 needs to be mixed into the anti-glare layer 16 so as to ensure the anti-glare properties of the anti-reflection film 10. In this case, the area of the protrusion 16b in the anti-glare layer 16 increases, so there is a risk that the coatability of the low refractive index layer 17 to the anti-glare layer 16 may decrease. The specific surface area of the scattering particles 162 may be calculated, for example, by the Brunauer-Emmett-Teller (BET) method, which measures the specific surface area of the particles from the amount of gas molecules adsorbed to the particles.

The amount of scattering particles 162 mixed varies depending on the average particle size of the scattering particles 162, etc., but is preferably 2 mass% or more and 40 mass% or less, more preferably 3 mass% or more and 30 mass%, and still more preferably 4 mass% to 20 mass% with respect to the solid content of the anti-glare layer 16. When the amount of scattering particles 162 mixed is less than 2 mass%, the density of the protruding scattering particles 162 decreases and the area of the protrusion 16b becomes small. In this case, in the anti-glare layer 16, the effect of suppressing the reflection phenomenon due to light scattering by the protrusion 16b is likely to become insufficient. Meanwhile, when the amount of scattering particles 162 mixed exceeds 40 mass%, the area of the protrusion 16b in the anti-glare layer 16 increases, so there is a risk that the coatability of the low refractive flow layer 17 for the anti-glare layer 16 decreases.

Here, when the anti-reflection film 10 is used in the display device 1, the scattering particles 162 included in the anti-glare layer 16 may cause the decrease in the contrast of the image displayed on the display device 1. When the high contrast of the image is required in the display device 1, it is preferable that the amount of scattering particles 162 mixed in the anti-glare layer 16 is smaller than the above-described range. Specifically, the amount of scattering particles 162 mixed is preferably 15 mass% or less, more preferably 10 mass% or less, and still more preferably 7 mass% or less, with respect to the solid content of the anti-glare layer 16.

As the scattering particles 162, inorganic particles or organic particles may be used. Examples of the scattering particles 162 include silica particles, alumina particles, titania particles, PMMA particles, polystyrene particles, polyethylene particles, melamine particles, nylon particles, acetylcellulose particles, silicon particles, polytetrafluoroethylene (PTFE) particles, and the like. Among these, from the viewpoint of the refractive index and mechanical strength, it is preferable to include at least one of silica particles, polymethyl methacrylate (PMMA) particles, melamine particles, acetylcellulose particles, and silicon particles.

In addition, the shape of the scattering particles 162 is not particularly limited, and examples thereof preferably include a spherical shape, an ellipsoid shape, a needle shape, an irregular shape, etc., but a spherical shape is preferable. When the scattering particles 162 have the spherical shape, the scattering particles 162 are likely to be uniformly dispersed in the binder 161, making it difficult for the protrusion 16b to be unevenly distributed in the anti-glare layer 16.

The refractive index of the scattering particles 162 is preferably 1.44 or more. In addition, the refractive index of the scattering particles 162 is preferably 1.60 or less.

In addition, in the anti-glare layer 16, it is preferable that the difference between the refractive index of the binder 161 and the refractive index of the scattering particles 162 is small. Specifically, the difference between the refractive index of the binder 161 and the refractive index of the scattering particles 162 is preferably 0.15 or less, and more preferably 0.10 or less. Since the difference between the refractive index of the binder 161 and the refractive index of the scattering particles 162 is small, the scattering of light at the interface between the binder 161 and the scattering particles 162 may decrease. As a result, the increase in the internal haze value of the anti-glare layer 16 may be suppressed, and it becomes easy to reduce the specular component include (SCI) when used as the anti-reflection film 10.

Also, from the same viewpoint, it is preferable that in the anti-glare layer 16, an interface (portion indicated by symbol X in FIG. 3) between the binder 161 and the scattering particles 162 is compatible. For this reason, the refractive index at the interface between the binder 161 and the scattering particles 162 changes continuously, and backscattering at the interface may be reduced. It becomes easier to make the internal haze smaller.

In the compatiblized portion, the unevenness 163 formed on the surface of the scattering particles 162 becomes smaller, but the unevenness 163 of the scattering particles 162 protruding from the surface of the binder 161 is maintained. Accordingly, in the anti-glare layer 16, even when the interface between the binder 161 and the scattering particles 162 is compatible, the effect of scattering light due to the unevenness 163 of the scattering particles 162 is maintained.

Examples of a method of compatiblizing an interface between a binder 161 and scattering particles 162. Also, as will be described in detail later, there is a method of mixing a solvent that dissolves the components of the scattering particles 162 when applying (coating) the application solution for producing the anti-glare layer 16. The fact that the interface between the binder 161 and the scattering particles 162 is compatiblized may be confirmed by observing the cross section of the anti-glare layer 16 using a scanning electron microscope (SEM) or the like.

As described above, the anti-glare layer 16 has the flat portion 16a having a flat surface shape, and the protrusion 16b formed by a portion of the scattering particles 162 protruding from the surface of the flat portion 16a. In the protrusion 16b, the unevenness 163 originating from the scattering particles 162 is formed.

Here, in general, in order to increase the anti-glare property of the anti-glare layer 16, there is a need to increase the unevenness on the surface of the anti-glare layer 16 and increase the external haze value. However, in the case of simply increasing the unevenness on the surface of the anti-glare layer 16, the coatability of the low refractive index layer 17, etc., stacked on the anti-glare layer 16 deteriorates. For example, when the unevenness on the surface of the anti-glare layer 16 is large, it becomes difficult to uniformly coat the low refractive index layer 17 on the anti-glare layer 16 due to a wet coating method or the like. In this case, the low refractive index layer 17 makes it difficult to reduce the amount of light reflected at the interface between the anti-glare layer 16 and the low refractive index layer 17. In addition, there may be cases where an image displayed on the liquid crystal panel 1a becomes white and blurred, and the clarity of the image deteriorates.

In addition, when the coating is performed using a sputter deposition method, a vapor deposition method, or the like, it is possible to produce a uniform low refractive index layer 17 on the anti-glare layer 16 with the large unevenness on the surface. However, since the low refractive index layer 17 that can be formed by these methods has a high refractive index, stacking (for example, four layers) with a high refractive index layer is necessary to ensure sufficient anti-reflection properties. As a result, coloring is visible when the anti-reflection film 10 is observed diagonally. In addition, manufacturing costs also increase significantly.

On the other hand, in the present embodiment, since the anti-glare layer 16 has the above-described structure, the external haze value of the anti-glare layer 16 may increase and the anti-glare property of the anti-reflection film 10 may increase. In addition, the decrease in the coatability of the low refractive index layer 17 to the anti-glare layer 16 may be suppressed.

That is, the plurality of protrusions 16b are formed in the anti-glare layer 16 by causing some of the scattering particles 162 to protrude. The unevenness 163 originating from the scattering particles 162 is formed on the surfaces of each protrusion 16b. In addition, the surface roughness of the protrusion (16b) is greater than that of the flat portion 16a. As a result, for example, compared to the case where the unevenness 163 is not formed on the surface of the protrusion 16b, the external haze value of the anti-glare layer 16 is higher, and light from the outside becomes easily scattered on the surface of the anti-glare layer 16. As a result, the reflection of light onto the liquid crystal panel 1a may be suppressed, and the anti-glare properties of the anti-reflection film 10 may be improved.

In addition, the flat portion 16a having a flat surface shape is formed on the anti-glare layer 16. For this reason, by producing the low refractive index layer 17 on the flat portion 16a of the anti-glare layer 16, the decrease in the coatability of the low refractive index layer 17 to the anti-glare layer 16 is suppressed. In addition, even when producing the low refractive index layer 17 using the wet coating method, it becomes possible to uniformly coat the low refractive index layer 17. As a result, the low refractive index layer 17 makes it possible to reduce the reflectance of the liquid crystal panel 1a and increase the clarity of the image displayed on the liquid crystal panel 1a.

When viewed from the direction in which the low refractive index layer 17 is stacked (upward), in the anti-glare layer 16, the ratio (area of flat portion 16a/area of protrusion 16b) of the area of the flat portion 16a to the area of the protrusion 16b is preferably 2.0 or more and 30 or less and more preferably 5.0 or more and 20 or less.

When the ratio of the area of the flat portion 16a to the area of the protrusion 16b is less than 2.0, since in the anti-glare layer 16, an area of a portion where the surface shape is flat becomes smaller, there is a risk that the coatability of the low refractive index layer 17 deteriorates. In addition, when the ratio of the area of the flat portion 16a to the area of the protrusion 16b exceeds 30, the area of the protrusion 16b becomes relatively small, so the unevenness 163 formed on the surface of the protrusion 16b may make it difficult to scatter light.

The film thickness of the flat portion 16a in the anti-glare layer 16 is preferably 1 µm or more and 10 µm or less, and more preferably 2 µm or more and 6 µm or less. When the film thickness of the flat portion 16a is less than 1 µm, the holding power of the scattering particles 162 by the binder 161 constituting the flat portion 16a is likely to decrease. In addition, mechanical properties required for the anti-glare layer 16, such as pencil hardness, become insufficient. Meanwhile, when the film thickness of the flat portion 16a exceeds 10 µm, it becomes difficult for the scattering particles 162 to protrude from the surface of the flat portion 16a, making it difficult for the protrusion 16b to be formed. In this case, in the anti-glare layer 16, the effect of suppressing the reflection phenomenon due to the light scattering by the protrusion 16b is likely to become insufficient.

In addition, in the protrusion 16b, the height at which the scattering particles 162 protrude from the surface of the flat portion 16a is, for example, 20% or more and 80% or less of the particle size of the scattering particles 162, and preferably 30% or more and 70% or less.

In addition, in the anti-glare layer 16 of the present embodiment, the low refractive index layer 17 is not stacked on the surface of the protrusion 16b, and the unevenness 163 on the surface of the scattering particles 162 is exposed, but is not limited thereto. The unevenness 163 on the surface of the scattering particles 162 may be covered with the low refractive index layer 17.

In addition, the anti-glare layer 16 may further include particles having a smaller average particle size. Particles having a small average particle size mean particles having an average particle size smaller than the thickness (i.e., the film thickness of the flat portion 16a) of the binder 161 in the anti-glare layer 16. Hereinafter, particles having a small average particle size are referred to as microparticles. Materials of the microparticles may include polymethyl (meth)acrylate, styrene, a polyacryl-styrene copolymer, a melamine resin, a silicone resin, a fluororesin, silica, aluminum oxide, etc. In the present embodiment, by mixing microparticles, it becomes possible to form the uniform anti-glare layer 16 in which the excessive aggregation of the scattering particles 162 is suppressed.

When the film thickness of the flat portion 16a of the anti-glare layer 16 is T, the average particle size of the microparticles is preferably 0.1 T or more and 0.9 T or less, more preferably 0.2 T or more and 0.8 T or less, and still more preferably 0.3 T or more and 0.7 T or less. In addition, the average particle size of the specific microparticles is preferably 0.5 µm or more and 3.0 µm or less, and more preferably 0.8 µm or more and 2.3 µm or less. When the average particle size of the microparticles is below the above range, the backscattering of incident light to the anti-glare layer 16 increases and the reflectance deteriorates. In addition, when the average particle size of the microparticles exceeds the above range, the microparticles protrude onto the surface of the binder 161, making it difficult to uniformly coat the low refractive index layer 17. In this case, it becomes difficult to reduce the reflectance of the liquid crystal panel 1a by the low refractive index layer 17.

In addition, the anti-glare layer 16 may further include nanoparticles. The nanoparticles are particles having an average particle size of 100 nm or less. Materials of the nanoparticles may include silica, aluminum oxide, zirconia, titania, indium oxide, etc., but among those, silica having a small difference in refractive index from the binder 161 is preferable. In the anti-glare layer 16 of the present embodiment, the nanoparticles are included in the binder 161, thereby increasing the specific gravity and viscosity of the binder 161, and preventing the scattering particles 162 in the anti-glare layer 16 from being agglomerated.

The content of the nanoparticles is preferably 1 mass% or more and 40 mass% or less, and more preferably 3 mass% or more and 30 mass% or less, with respect to the solid content of the anti-glare layer 16. By setting the content of the nanoparticles to be within the above range, the above-described effects due to the nanoparticles may be obtained without causing the agglomeration of the nanoparticles in the anti-glare layer 16.

### <Description of Low Refractive Index Layer 17>

The low refractive index layer 17 is a layer for reducing the reflectance of the liquid crystal panel 1a. In the present embodiment, the low refractive index layer 17 is stacked on the flat portion 16a in the anti-glare layer 16.

The low refractive index layer 17 is a layer having a relatively low refractive index. Specifically, the low refractive index layer 17 needs to have a refractive index of 1.40 or less. In addition, the low refractive index layer 17 preferably has a refractive index of 1.20 or more and 1.34 or less. When the refractive index of the low refractive index layer 17 is within this range, the reflectance in the liquid crystal panel 1a may be further reduced.

The low refractive index layer 17 may be formed as a single layer or as a multilayer, but from the viewpoint of manufacturing cost, it is preferable to form with as few layers as possible.

The thickness of the low refractive index layer 17 is 50 nm or more and 500 nm or less, and is preferably 80 nm or more and 120 nm or less. In addition, it is preferable that the thickness (average film thickness) of the low refractive index layer 17 is sufficiently small, compared to the particle size of the scattering particles 162 in the anti-glare layer 16 and the height of the protrusion 16b of the anti-glare layer 16.

The low refractive index layer 17 includes the binder 171 and hollow silica particles 172 as an example of hollow particles distributed within the binder 171. In addition, although not illustrated, the low refractive index layer 17 further includes a surface modifier mainly distributed on a surface side (upper side in FIG. 2) of the binder 171.

The binder 171 has a three-dimensional cross-linked structure and connects the hollow silica particles 172 to each other. The binder 171 includes resin as its main component. Examples of the resin may include a fluorinated resin. In this case, all the resins may be a fluorine-containing resin, or a portion of the resins may be a fluorine-containing resin. The fluorine-containing resin is a resin containing fluorine, for example, polytetrafluoroethylene (PTFE). In addition, the fluorine-containing resin is, for example, perfluoroalkoxy alkane (PFA). Also, the fluorine-containing resin is, for example, perfluoro ethylene propylene copolymer (FEP), ethylene-tetrafluoroethylene (ETFE). The fluorine-containing resin has a low refractive index. Therefore, by using the fluorine-containing resin, the low refractive index layer 17 tends to have a lower refractive index and the reflectance may be further reduced.

In addition, it is more preferable that the fluorine-containing resin is a photocurable fluorine-containing resin. The photocurable fluorine-containing resin is obtained by photopolymerization of photopolymerizable fluorine-containing monomers represented by the following general formulas (1) to (2). The photocurable fluorine-containing resin includes the structural unit M in an amount of 0.1 mol % or more and 100 mol % or less. In addition, the photocurable fluorine-containing resin also includes structural unit A that exceeds 0 mol% and is 99.9 mol% or less. In addition, the number average molecular weight is 30,000 or more and 1,000,000 or less.

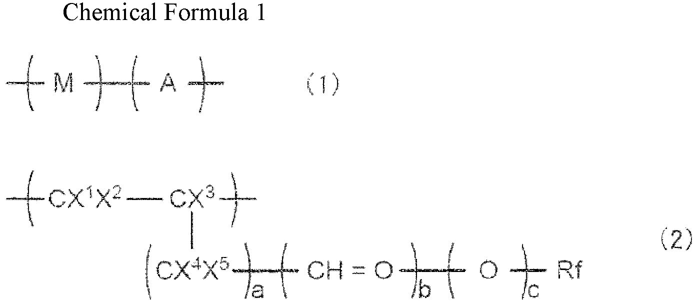

In General Formula (1), the structural unit M is a structural unit derived from the fluorine-containing ethylenic monomer shown in General Formula (2). In addition, the structural unit A is a structural unit derived from a monomer copolymerizable with the fluorine-containing ethylenic monomer shown in General Formula (2).

In General Formula (2), X1 and X2 are H or F. In addition, X3 is H, F, CH3, or CF3. X4 and X5 are H, F or CF3. Rf is an organic group in which Y1 of 1 or more and 3 or less is bonded to a fluorine-containing alkyl group having carbon atoms of 1 or more and 40 or less or a fluorine-containing alkyl group having an ether bond having carbon atoms of 2 or more and 100 or less. In addition, Y1 is a monovalent organic group having carbon atoms of 2 to 10 and having an ethylenic carbon-carbon double bond at the terminal. In addition, a is 0, 1, 2, or 3, and b and c are 0 or 1.

As the photopolymerizable fluorine-containing resin, for example, OPTOOL AR-110 manufactured by Daikin Industries, Ltd., can be exemplified. Also, EBECRYL8110 manufactured by DAICEL-ALLNEX LTD., LINC series manufactured by KYOEISHA CHEMICAL Co., LTD., etc., may be exemplified.

In addition, specific examples of the binder that does not include a fluorine-containing atom may include light acrylate POB-A, NP-A, DCP-A, TMP-A, UA-306I, and UA-306H manufactured by KYOEISHA CHEMICAL Co., Ltd. In addition, the binder may include NK esters A-DOD-N, A-200, and A-BPE-4 manufactured by SHIN-NAKAMURA CHEMICAL CO., LTD. In addition, the binder may include Aronics M-315, M-306, and M-408 manufactured by Toagosei Company, Limited. In addition, the binder may include KAYARAD DPHA, DPEA-12, and the like manufactured by Nippon Kayaku Co., Ltd. These binders are effective in improving film strength.

The hollow silica particles 172 have an outer layer, and the inside of the outer layer is hollow or porous body. The outer layer and the porous body are mainly made of silicon oxide (SiO₂). In addition, a large number of photopolymerizable groups and hydroxyl groups are bonded to the surface side of the outer layer. The photopolymerizable group and the outer layer are bonded through at least one bond among an Si-O-Si bond and a hydrogen bond. Examples of the photopolymerizable group include an acryloyl group and a methacloyl group. That is, the hollow silica particles 172 include at least one of an acryloyl group and a methacryloyl group as a photopolymerizable group. The photopolymerizable group is also called an ionizing radiation curable group. The hollow silica particles 172 may have at least a photopolymerizable group, and the number and type of functional groups are not particularly limited.

The average primary particle size of the hollow silica particles 172 is preferably 35 nm or more and 120 nm or less. In addition, the average primary particle size of the hollow silica particles 172 is more preferably 40 nm or more and 90 nm or less. When the average primary particle size is less than 35 nm, the porosity of the hollow silica particles 172 tends to become small. Therefore, it becomes difficult to achieve the effect of lowering the refractive index of the low refractive index layer 17. In addition, when the average primary particle size of the hollow silica particles 172 exceeds 120 nm, the unevenness on the surface of the low refractive index layer 17 is likely to become noticeable. Therefore, antifouling properties and scratch resistance is likely to decrease.

It is possible to measure the average primary particle size of the hollow scattering particles 172 by an observation image using a scanning electron microscope (SEM), a transmission electron microscope (TEM), and a scanning transmission electron microscope (STEM) of the dried film of the particle dispersion liquid.

The amount of hollow silica particles 172 mixed is preferably 30 mass% or more and 65 mass% or less in the low refractive index layer 17. When the amount of hollow silica particles 172 mixed is less than 30 mass%, the refractive index of the low refractive index layer 17 increases, and the reflectance of the anti-reflection film 10 is likely to increase. In addition, when the amount of hollow silica particles 172 mixed exceeds 65 mass%, the film strength is likely to decrease. In addition, deposits are easily visible and difficult to wipe off.

In addition, the hollow silica particles 172 may have a plurality of maximum values in a frequency curve (grain-size distribution curve) for the particle size of the hollow silica particles 172. That is, in this case, the hollow silica particles 172 are composed of a plurality of particles with different particle size distributions. For example, the plurality of hollow silica particles 172 with an average primary particle size of 30 nm, 60 nm, and 75 nm are selected, mixed, and used.

The surface modifier is mainly distributed on the surface side of the binder 171 and modifies the surface of the low refractive index layer 17. That is, the surface modifier is segregated on the surface side of the low refractive index layer 17. In addition, even if the surface modifier is present inside the binder 171, it does not lower the function of the low refractive index layer 17.

In the present embodiment, the surface modifier includes an oil-repellent surface modifier and a lipophilic surface modifier.

The oil-repellent surface modifier serves to improve the oil repellency of the membrane surface by mixing with the binder 171, etc., and segregating on the surface. The effect of the oil-repellent surface modifier may be confirmed by measuring the contact angle of oleic acid or the like. In this case, the effect may be confirmed by the difference (contact angle when added-contact angle when not added) in the contact angle of the membrane surface between when adding the oil-repellent surface modifier and not adding the oil-repellent surface modifier. In this case, the contact angle increases when the oil-repellent surface modifier is added. It is preferable that the difference in the contact angle is 10° or more. In addition, the difference in the contact angle is more preferably 20° or more, and even more preferably 30° or more.

The oil-repellent surface modifier is preferably a fluorine-based compound having a photopolymerizable group.

Specific examples of the oil-repellent surface modifier include KY-1203 and KY-1207 manufactured by Shin-Etsu Chemical Co., Ltd. Also, examples of the oil-repellent surface modifier may include OPTOOL DAC-HP manufactured by Daikin Industries, Ltd. In addition, examples of the oil-repellent surface modifier may include MEGAFAC F-477, F-554, F-556, F-570, RS-56, RS-58, RS-75, RS-78, RS-90 manufactured by DIC Corporation. In addition, examples of the oil-repellent surface modifier may include FS-7024, FS-7025, FS-7026, FS-7031, and FS-7032 manufactured by FluoroTechnology Co., LTD. In addition, examples of the oil-repellent surface modifier may include H-3593 and H-3594 manufactured by DKS Co., Ltd. In addition, examples of the oil-repellent surface modifier may include SURECO AF Series manufactured by AGC Inc. Examples of the oil-repellent surface modifier may include Futter Gento F-222F, M-250, 601AD, and 601ADH2 manufactured by NEOS COMPANY LIMITED.

The lipophilic surface modifier serves to improve the lipophile of the membrane surface by mixing with the binder 171, etc., and segregating on the surface. The effect of the lipophilic surface modifier may be confirmed by measuring the contact angle of oleic acid or the like. In this case, the effect may be confirmed by the difference (contact angle when not added-contact angle when added) in the contact angle of the membrane surface between when adding the lipophilic surface modifier and not adding the lipophilic surface modifier. In this case, the contact angle decreases when the lipophilic surface modifier is added. It is preferable that the difference in the contact angle is 3° or more. In addition, the difference in the contact angle is more preferably 5° or more, and even more preferably 7° or more.

Specific examples of the lipophilic surface modifier may include Metaclear 350L manufactured by Sanyo Chemical Industries, Ltd. In addition, examples of the lipophilic surface modifier may include Futter Gento 730LM, 602A, 650A, and 650AC manufactured by NEOS COMPANY LIMITED.

Even if a deposit such as sebum adheres to the low refractive index layer 17, the deposit is not easily visible. Also, it is easy to clean attachments. This is the same even if a large amount of hollow silica particles 172 are included.

### <Characteristics of Anti-reflection Film 10>

Next, the characteristics of the anti-reflection film 10 in which the anti-glare layer 16 and the low refractive index layer 17 are stacked will be described.

The anti-reflection film 10 preferably has a summed haze value (total haze value) of the internal haze value and the external haze value of 20% or more, and more preferably 30% or more. The haze value of the anti-reflection film 10 may be measured based on JIS K7136:2000. In addition, the anti-reflection film 10 preferably has a haze value of 80% or less, and more preferably 60% or less. When the haze value of the anti-reflection film 10 is less than 20%, the anti-glare properties of the anti-reflection film 10 become insufficient, and the reflection phenomenon of light onto the liquid crystal panel 1a is likely to occur.

In addition, the anti-reflection film 10 preferably has an external haze value of 15% or more, and more preferably 20% or more. The external haze value is derived from the surface shape of the anti-reflection film 10. The larger the external haze value, the easier it is for light to be scattered on the surface of the anti-reflection film 10. In this embodiment, the external haze value is derived from the protrusion 16b of the anti-glare layer 16 and the irregularities 163 formed on the surface of the protrusion 16b (scattering particles 162).

Since the external haze value of the anti-reflection film 10 is 15% or more, the reflection phenomenon of light onto the liquid crystal panel 1a is suppressed, and the anti-glare property of the anti-reflection film 10 may be further improved.

The external haze value of the anti-reflection film 10 may be obtained by subtracting the internal haze value measured by the method described later from the total haze value.

In addition, the anti-reflection film 10 preferably has an external haze value of 15% or less, and more preferably 7 % or less. The internal haze value is derived from the composition or the like of each layer constituting the anti-reflection film 10. The smaller the internal haze value, the more difficult it is for light to be scattered within the anti-reflection film 10.

Since the internal haze value of the anti-reflection film 10 is 15% or less, the deterioration in the clarity of the image displayed on the liquid crystal panel 1a due to light scattering within the anti-reflection film 10 is suppressed.

The internal haze value of the anti-reflection film 10 may be measured based on JIS K7136:2000 in a state in which the irregularities 163 of the protrusion 16b exposed on the surface of the anti-reflection film 10 are flat by being filled with a liquid that does not dissolve the anti-glare layer 16 (scattering particles 162) and has almost the same refractive index.

In addition, the anti-reflection film 10 preferably has a gross value of 10 or less, more preferably 5 or less, as measured at an incident angle of 60° from the low refractive index layer 17 side.

In addition, the anti-reflection film 10 preferably has a gross value of 50 or less, more preferably 40 or less, as measured at an incident angle of 85° from the low refractive index layer 17 side.

The lower the gloss value of the anti-reflection film 10, the easier it is for light to be scattered on the surface of the anti-reflection film 10, and the reflection phenomenon of light onto the liquid crystal panel 1a is suppressed. In this embodiment, the gross value measured at an incident angle of 60° from the low refractive index layer 17 side of the anti-reflection film 10 is set to 10 or less, and the gross value measured at an incident angle of 85° from the low refractive index layer 17 side is set to 50 or less, so the anti-glare properties of the anti-reflection film 10 may be further improved.

### <Description of Modified Example Having Anisotropic Diffusion Layer 18>

Next, a modified example of the anti-reflection film 10 will be described. The layer structure of the anti-reflection film 10 is not limited to that illustrated in FIG. 2.

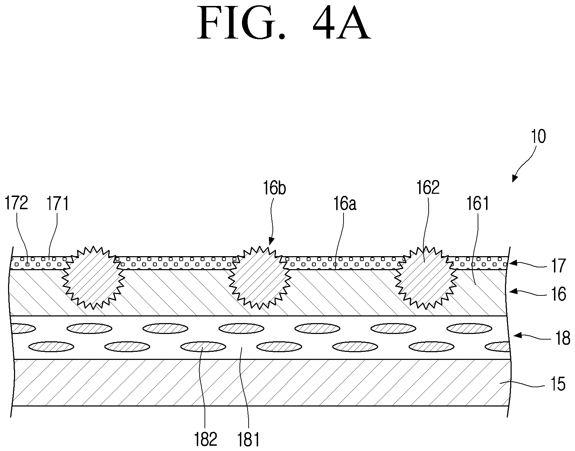

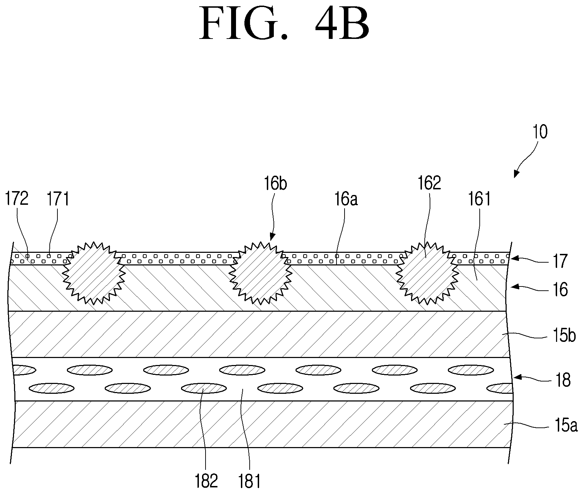

FIGS. 4A and 4B are diagrams illustrating modified examples of the anti-reflection film 10. In FIGS. 4A and 4B, the same symbols are used for the same components as those in FIG. 2, and detailed description thereof will be omitted herein.

The anti-reflection film 10 illustrated in FIGS. 4A and 4B is different from the anti-reflection film 10 illustrated in FIG. 2 in that it includes an anisotropic diffusion layer 18 in addition to the substrate 15 (substrates 15a and 15b), the anti-glare layer 16, and the low refractive index layer 17.

In the anti-reflection film 10 illustrated in FIG. 4A, the substrate 15, the anisotropic diffusion layer 18, the anti-glare layer 16, and the low refractive index layer 17 are stacked in this order.

In addition, in the anti-reflection film 10 illustrated in FIG. 4A, the substrate 15a, the anisotropic diffusion layer 18, the substrate 15b, the anti-glare layer 16, and the low refractive index layer 17 are stacked in this order. In addition, in the example illustrated in FIG. 4B, the anisotropic diffusion layer 18 has adhesiveness, and the substrate 15a and substrate 15b are attached through the anisotropic diffusion layer 18.

The anisotropic diffusion layer 18 is a layer that anisotropically diffuses light. Here, `anisotropic diffusion' is the property of having strong light diffusion in a specific direction. The `anisotropic diffusion layer' is a diffusion layer that has strong light diffusion in a specific direction. When isotropic light (circular light) such as laser light is irradiated on a member having an anisotropic diffusion layer, the transmitted light becomes a straight or elliptical shape.

The anisotropic diffusion layer 18 includes at least a resin part 181 and anisotropic particles 182.

The resin part 181 is made of resin that disperses the anisotropic particles 182. Accordingly, the resin part 181 may be a dispersion layer that fixes the anisotropic particles 182 so that a major axis direction thereof is aligned along one direction.

The anisotropic particles 182 have an anisotropic shape, and the major axis direction thereof is arranged along one direction within the resin part 181. In this case, as illustrated in FIGS. 4A and 4B, the major axis direction of the anisotropic particles 182 is arranged along the in-plane direction of the anisotropic diffusion layer 18.

The resin part 181 is made of resin as described above. It is preferable that the refractive index of the resin part 181 is 1.45 or more and 1.65 or less. Specular component exclude (SCE), which is the reflectance excluding the specular light component of the anisotropic diffusion layer 18, is preferably 1.0% or less. By setting the refractive index of the resin part 181 to be within this range, the SCE is likely to be 1.0% or less. On the other hand, beyond this range, the SCE is likely to exceed 1.0%.

As the resin constituting the resin part 181, for example, (meth)acrylic resin, polyethylene resin, and polypropylene resin may be used. Also, for example, a polystyrene resin, a polyurethane resin, a polycarbonate resin, a polyester resin, or a silicone resin may be used.

In addition, as in the example illustrated in FIG. 4B, when the anisotropic diffusion layer 18 has adhesiveness, a resin having adhesiveness may be selected as the resin constituting the resin part 181.

The anisotropic particles 182 have an anisotropic shape and, in this embodiment, form an elliptical spherical shape. Due to this shape, the anisotropic particles 182 have different refractive indices in the major axis direction and in the minor axis direction. Due to this, the anisotropic diffusion property is expressed in the anisotropic diffusion layer 18. In addition, the refractive index of the anisotropic particles 182 and the refractive index of the resin part 181 are different. In addition, the shape of the anisotropic particles 182 is not particularly limited as long as it is an anisotropic shape. For example, it may be a spindle shape, a needle shape, a fiber shape, a cylindrical shape, a disk shape, etc.

Here, the refractive index of the anisotropic particles 182 in the major axis direction is nax, the refractive index in the minor axis direction is nay, and the refractive index of the resin part 181 is nb. When the anisotropic diffusion direction by the anisotropic particles 182 is the minor axis direction, the difference between the refractive index nax in the major axis direction of the anisotropic particles 182 and the refractive index nb of the resin part 181 is preferably small. In addition, when the anisotropic diffusion direction by the anisotropic particles 182 is the minor axis direction, the difference between the refractive index nay in the minor axis direction of the anisotropic particles 182 and the refractive index nb of the resin part 181 is preferably small. That is, the difference between the refractive indexes nax and nay of the anisotropic particles 182 in the direction perpendicular to the anisotropic diffusion direction and the refractive index nb of the resin part 181 is preferably smaller.

In addition, specifically, it is preferable that at least one of the following relationships (I) and (II) is established. By setting the refractive index of the anisotropic particles 182 and the resin part 181 to be within the following range, backscattering in a direction perpendicular to the anisotropic diffusion direction is suppressed. It becomes possible to lower the SCE of the anisotropic diffusion layer 18.
(I) | nb-nax| < 0.04 and 0.04 <| nb-nay| < 0.50
(II) | nb-nay| < 0.04 and 0.04 <| nb-nax| < 0.50

In addition, in order to set the SCE of the anisotropic diffusion layer 18 to 1.0% or less, it is preferable that the length and aspect ratio of the anisotropic diffusion layer 18 is within the following range. Beyond this range, the SCE is likely to exceed 1.0%.

That is, the anisotropic particles 182 preferably have a length in the major axis direction of 0.5 µm or more and 500 µm or less. In addition, the anisotropic particles 182 more preferably have a length in the major axis direction of 1 µm or more and 200 µm or less.

The anisotropic particles 182 preferably have a length in the minor axis direction of 0.05 µm or more and 30 µm or less. In addition, the anisotropic particles 182 more preferably have a length in the minor axis direction of 0.1 µm or more and 10 µm or less.

By making the anisotropic particles 182 of this size, it is possible to suppress the backscattering at the interface between the anisotropic particles 182 and the resin part 181 while ensuring good anisotropic diffusion properties, making it easy to reduce the SCE of the anisotropic diffusion layer.

In addition, it is preferable that the aspect ratio of the anisotropic particles 182, which is the ratio between the length in the major axis direction and the length in the minor axis direction, is 10 or more. Moreover, it is more preferable that the aspect ratio is 20 or more. By setting the aspect ratio of the anisotropic particles 182 to be within the range, it becomes easy to secure the anisotropic diffusion that can improve the viewing angle characteristics of the display.

Also, from the same viewpoint, it is preferable that the interface between the anisotropic particles 182 and the resin part 181 is compatible. As a result, the refractive index at the interface between the anisotropic particles 182 and the resin part 181 changes continuously, making it possible to reduce the backscattering. It becomes easier to make the SCE smaller. In addition, in this case, the boundary between the anisotropic particle 182 and the resin part 181 is ambiguous because it is compatible. However, even in this case, it is clear that the anisotropic particles 182 exist as particles within the resin part 181. Examples of a method of compatibilizing an interface may include a method of mixing a compatibilizer. The compatiblizing of the interface may be confirmed by scanning electron microscopy (SEM) of the cross section of the anisotropic diffusion layer 18.

The anisotropic particles 182 include, for example, at least one of a metal oxide, a carbonate compound, a hydroxide compound, and a phosphate compound. Metal oxides include, for example, silica, titanium oxide, aluminum oxide, and zinc oxide, and the like. In addition, the anisotropic particles 182 are, for example, compounds such as calcium carbonate, silicon carbide, nitrogen carbide, and basic magnesium sulfate. In addition, the anisotropic particles 182 are glass fiber, (meth)acrylic resin, polystyrene resin, melamine resin, etc.

The anisotropic diffusion layer 18 preferably has a haze value of 20% or more and 80% or less. Moreover, it is more preferable that the haze value is 30% or more and 65% or less. As a result, it becomes possible to secure clear image quality with less glare when the anisotropic diffusion layer 18 is mounted on the display.

In addition, the anisotropic diffusion property of the anisotropic diffusion layer 18 may be measured with a goniophotometer. The transmitted light when the light is irradiated at an incident angle of 0° (vertical direction) to the anisotropic diffusion layer 18 is acquired while changing the light reception angle. As a result, the intensity distribution state of the transmitted and scattered light is measured. By acquiring this in the anisotropic diffusion direction and in a direction perpendicular to the anisotropic diffusion direction, it becomes possible to quantitatively evaluate anisotropic diffusion. In this embodiment, anisotropic diffusion property is evaluated by anisotropic diffusivity (ADV). The anisotropic diffusivity may be calculated using the following formula. The anisotropic diffusion layer 18 preferably has the anisotropic diffusivity (ADV) of 3 or more. In addition, the ADV is more preferably 15 or more, and even more preferably 25 or more. ADV = (5° transmitted light in a direction of anisotropic diffusion measured with a variable angle photometer)/(5° transmitted light in a direction perpendicular to an anisotropic diffusion direction measured with a variable angle photometer)

Here, the anisotropic diffusion layer 18 is not limited to a form having a resin part 181 and anisotropic particles 182 as illustrated in FIGS. 4A to 4B as long as it may anisotropically diffuse light.

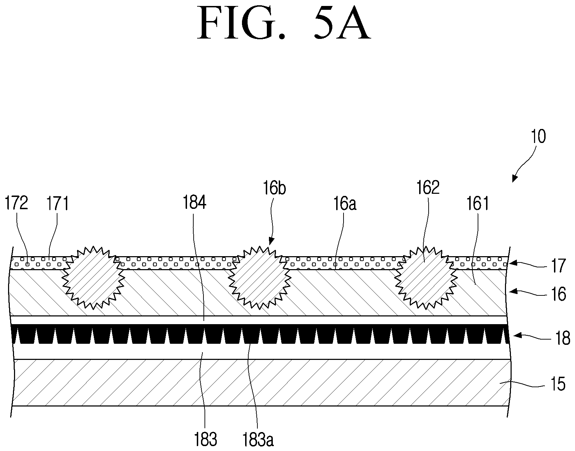

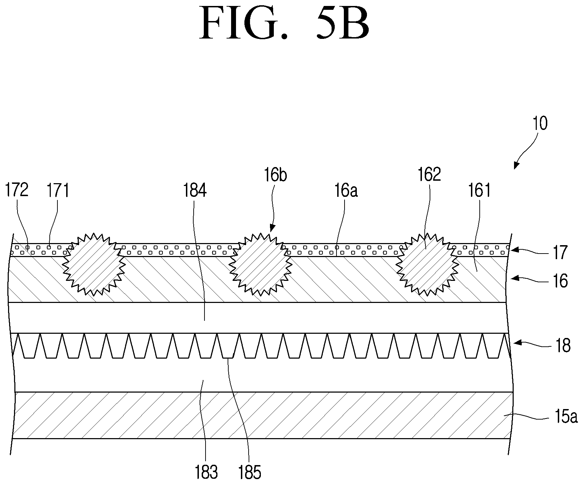

FIGS. 5A and 5B are diagrams describing other forms of the anisotropic diffusion layer 18.

The anisotropic diffusion layer 18 illustrated in FIG. 5A includes a core layer 183 including a vacancy 183a and a skin layer 184 for protecting the core layer 183. The vacancy 183a in the core layer 183 is crazing having a substantially straight shape and is formed through the crazing processing or the like. In this anisotropic diffusion layer 18, incident light diffuses anisotropically at the interface between the resin constituting the core layer 183 and the vacancy 183a, contributing to expanding the viewing angle of the anti-reflection film 10. Specific examples of such anisotropic diffusion layer 18 include Examples 1 to 5 of International Cooperation No. 2019/156003.

In addition, the anisotropic diffusion layer 18 illustrated in FIG. 5B has an uneven-shaped interface 185 within the layer. The interface 185 is formed, for example, of resins with different refractive indices. In this anisotropic diffusion layer 18, the incident light is anisotropically diffused at the interface 185, contributing to expanding the viewing angle of the anti-reflection film 10. As a specific example of such anisotropic diffusion layer 18, an example of the substrate disclosed in Japanese Patent Application Laid-Open No. 2020-16881 may be given.

### <Description of Modified Example Provided with High Refractive Index Layer 19>

Next, another modified example of the anti-reflection film 10 will be described.

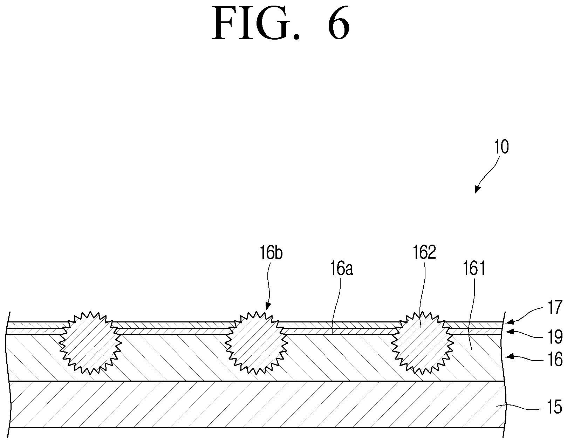

FIG. 6 is a diagram illustrating another modified example of the anti-reflection film 10. In addition, in FIG. 6, the same symbols are used for the same components as those in FIG. 2, and detailed description thereof will be omitted herein.

In the anti-reflection film 10 illustrated in FIG. 6, the substrate 15, the ani-glare layer 16, the high refractive layer 19, and the low refractive index layer 17 are stacked in this order. In addition, the anti-reflection film 10 illustrated in FIG. 6 is different from the anti-reflection film 10 illustrated in FIG. 2 in that it is includes the high refractive index layer 19.

The high refractive index layer 19 is a layer for further reducing the reflectance of the liquid crystal panel 1a.

The high refractive index layer 19 is provided below the low refractive index layer 17 and furthermore, between the flat portion 16a of the anti-glare layer 16 and the low refractive index layer 17.

The high refractive index layer 19 includes a binder and high refractive index particles. The high refractive index layer 19 may be formed, for example, from an application solution including the binder and the high refractive index particles. The high refractive index layer 19 may be formed as a single layer or as a multilayer, but from the viewpoint of manufacturing cost, it is preferable to form with as few layers as possible.

In order to further reduce the reflectance of the liquid crystal panel 1a, it is preferable that the refractive index of the high refractive index layer 19 is high. The refractive index of the high refractive index layer 19 is preferably 1.55 or more and 1.80 or less, and more preferably 1.60 or more and 1.75 or less.

In addition, the upper limit of the thickness of the high refractive index layer 19 is preferably 500 nm or less. Moreover, the upper limit of the thickness of the high refractive index layer 19 is more preferably 350 nm or less, and still more preferably 200 nm or less. In addition, the lower limit of the thickness of the high refractive index layer 19 is preferably 50 nm or more. Moreover, 80 nm or more is more preferable, and 100 nm or more is still more preferable.

Examples of the high refractive index particles include zirconium oxide, hafnium(IV) oxide, tantalum oxide, titanium oxide, zinc oxide, aluminum oxide, magnesium oxide, tin oxide, yttrium oxide, barium titanate, antimony-doped tin oxide (ATO), phosphorus-doped tin oxide (PTO), indium-doped tin oxide (ITO), zinc sulfide, etc. From the viewpoint of durability stability, zirconium oxide, barium titanate, antimony-doped tin oxide (ATO), phosphorus-doped tin oxide (PTO), and indium-doped tin oxide (ITO) are particularly preferable.

The average particle size (average primary particle size) of the primary particles of the high refractive index particles is preferably 1 nm or more and 200 nm or less. Moreover, the average particle size is more preferably 3 nm or more and 100 nm or less, and still more preferably 5 nm or more and 50 nm or less.

It is possible to measure the average primary particle size of the high refractive index particles by an observation image using a scanning electron microscope (SEM), a transmission electron microscope (TEM), and a scanning transmission electron microscope (STEM) of the dried film of the particle dispersion liquid.

The high refractive index particles are preferably subjected to dispersion stabilization treatment from the viewpoint of suppressing agglomeration. Means for dispersion stabilization include using surface-treated particles or adding a dispersant. In addition, means of adding other particles with a lower surface charge than the high refractive index particles are also available.

The content of the high refractive index particles is preferably 20 parts by mass or more and 500 parts by mass or less with respect to 100 parts by mass of the binder. Moreover, the content of the high refractive index particles is more preferably 50 parts by mass or more and 400 parts by mass or less, and still more preferably 100 parts by mass or more and 300 parts by mass or less.

However, in order to reduce the content of the high refractive index particles, the refractive index of the binder is preferably about 1.50 or more and 1.70 or less.

The high refractive index layer 19 may include other components as needed in addition to the binder and the high refractive index particles. For example, the high refractive index layer 19 may include additives such as a polymerization initiator, ultraviolet absorber, leveling agent, and surfactant, and a diluting solvent. The surface state of the high refractive index layer 19 is controlled by adding the leveling agent, the surfactant, etc. As a result, it becomes possible to improve the performance of the upper layer. In this case, the upper layer is, for example, the low refractive index layer 17.

In addition, although the drawings are omitted, the high refractive index layer 19 illustrated in FIG. 6 may be applied to the anisotropic diffusion layer 18 illustrated in FIGS. 4A and 4B and 5A and 5B. In addition, the anti-reflection film 10 having the anisotropic diffusion layer 18 illustrated in FIGS. 4A and 4B and FIGS. 5A and 5B may further include the high refractive index layer 19 between the anti-glare layer 16 and the low refractive index layer 17, as illustrated in FIG. 6.

### (Description of Polarizing Plate)

In addition, the anti-glare layer 16 and the low refractive index layer 17 of this embodiment may be used as a surface film of the polarizing plate.

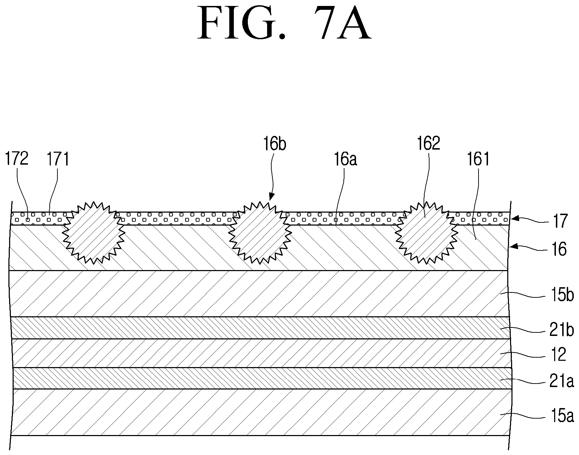

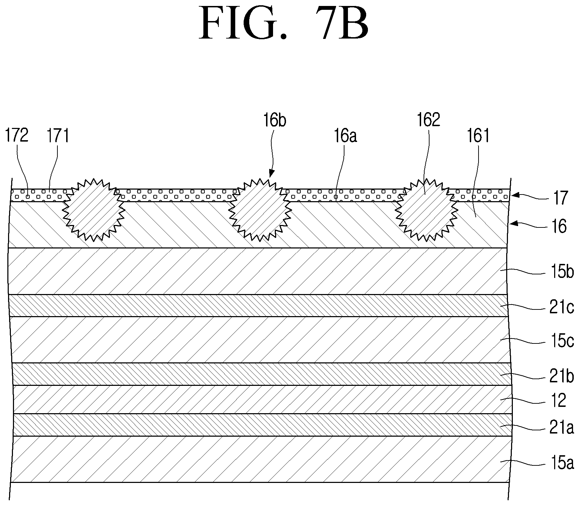

FIGS. 7A and 7B are diagrams illustrating a configuration example of a polarizing plate to which the present embodiment is applied. In addition, in FIGS. 7A and 7B, the same symbols are used for the same components as those in FIG. 2, and detailed description thereof will be omitted herein.

In the polarizing plate illustrated in FIG. 7A, the substrate 15a, an adhesive layer 21a, and the polarizing film 12 are stacked in this order. Furthermore, an adhesive layer 21b, the substrate 15b, the anti-glare layer 16, and the low refractive index layer 17 are stacked thereon. In addition, in this case, the substrate 15 and the adhesive layer 21 are each formed in two layers, but may be made of the same material or may be made of different materials.

In this case, the polarizing film 12 is attached on the substrate 15a using the adhesive layer 21a. Furthermore, a resin film composed of the substrate 15b and the low refractive index layer 17 is attached thereto using the adhesive layer 21b. The adhesive layers 21a and 21b are, for example, a layer made of ultraviolet (UV) adhesive. In addition, the adhesive layers 21a and 21b may be a pressure sensitive adhesive (PSA). In addition, the adhesive layers 21a and 21b may be an optical clear adhesive (OCA). In addition, the adhesive layers 21a and 21b may be an optical clear resin (OCR). Among those, the UV adhesive may be preferably used.

In addition, the substrate 15a, the adhesive layer 21a, and the polarizing film 12 are stacked on the polarizing plate illustrated in FIG. 7B. The adhesive layer 21b and the substrate 15c are stacked thereon. Furthermore, an adhesive layer 21c, the substrate 15b, the low refractive index layer 17 are stacked thereon. That is, the polarizing plate illustrated in FIG. 7B is different from the polarizing plate illustrated in FIG. 7A in that the substrate 15c and the adhesive layer 21c are added. In this case, for example, the adhesive layers 21a and 21b may be a layer by the UV adhesive, and the adhesive layer 21c may be a layer by the PSA.

In addition, although the drawings are omitted, when the anti-glare layer 16 and the low refractive index layer 17 are applied to the polarizing plate, the anisotropic diffusion layer 18 (FIGS. 4A and 4B, FIG. 5A and 5B) described above or the high refractive index layer 19 (see FIG. 6) may be further added.

### <Description of Method of Manufacturing Anti-reflection Film 10>

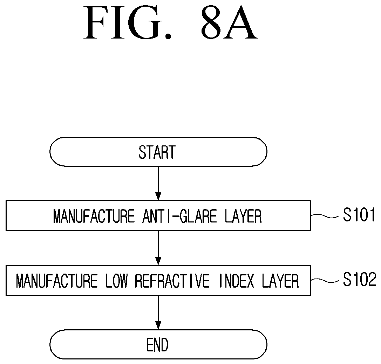

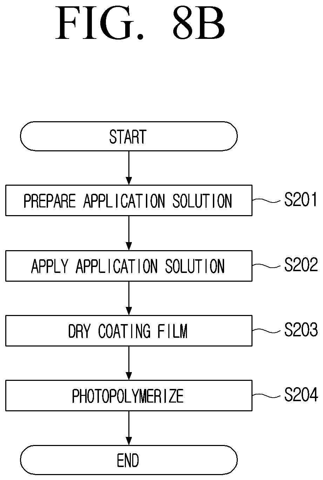

Next, the method of manufacturing an anti-reflection film 10 will be described. Here, the method of manufacturing an anti-reflection film 10 having a layer structure as illustrated in FIG. 2 will be described as an example. FIG. 8A is a flowchart illustrating an example of the method of manufacturing an anti-reflection film 10, and FIG. 8B is a flowchart illustrating a method of manufacturing an anti-glare layer 16 and a low refractive index layer 17 in an anti-reflection film 10.

First, the anti-glare layer 16 is manufactured on the substrate 15 (step 101: process of manufacturing an anti-glare layer). For example, the anti-glare layer 16 is manufactured by coating the application solution, which is the basis for the anti-glare layer 16, on the substrate 15.

Next, the low refractive index layer 17 is manufactured on the anti-glare layer 16 (step 102: process of manufacturing a low refractive index layer). For example, the low refractive index layer 17 is manufactured by coating the application solution, which is the basis of the low refractive index layer 17, on the anti-glare layer 16. In this example, the low refractive index layer 17 is manufactured on the flat portion 16a of the anti-glare layer 16.

Each layer of the anti-glare layer 16 and the low refractive index layer 17 may be manufactured as follows using a wet coating method.

First, the application solution is prepared to form each layer (step 201: preparation process). Here, "preparation" may include preparing by purchasing the application solution as well as preparing by manufacturing the application solution.

The application solution is composed of the solid content and solvent.

When manufacturing the anti-glare layer 16, the solid content includes monomers, oligomers, and polymers that is the basis for the binder 161. The solid content includes the scattering particles 162. The monomer and/or oligomer polymerizes to become a resin included the binder 161. In this embodiment, the polymerization is photopolymerization, thermal polymerization, etc. Hereinafter, this monomer and/or oligomer may be referred to as a "binder component."

When manufacturing the low refractive index layer 17, the solid content includes the binder component that is the basis for the binder 171. In addition, the solid content includes the hollow silica particles 172 and the surface modifier.

Moreover, the solid content of each layer includes a polymerization initiator. In addition, the solid content may include additives such as a dispersant, anti-foaming agent, ultraviolet absorber, and leveling agent.

Each solid content is added to the solvent and stirred to manufacture the application solution for each layer.

The solvent disperses the solid content. As a solvent, for example, methylene chloride, toluene, xylene, ethyl acetate, butyl acetate, and acetone may be used. Also, methyl ethyl ketone (MEK), methyl isobutyl ketone (MIBK), ethanol, methanol, normal-propyl alcohol (n-Propyl alcohol) may be used. In addition, isopropyl alcohol, tert-butyl alcohol, 1-butanol, mineral spirit, oleic acid, cyclohexanone may be used. In addition, N-methyl-2-prolidone (NMP), dimethyl phthalate (DMP), dimethyl carbonate, and dioxolane may be used.

The solid content concentration of the application solution may be, for example, 2 mass% or more and 80 mass% or less.

The solid content concentration of the application solution of the anti-glare layer 16 is set so that the area ratio between the flat portion 16a and the protrusion 16b in the anti-glare layer 16 is within a desired range, depending on the average particle size, the mixing amount, or the like of the scattering particles 162.

In addition, the application solution of the low refractive index layer 17 preferably has the lower solid content concentration than that of the anti-glare layer 16 to ensure the film thickness uniformity during the coating.

Next, the application solution is applied (coated) to manufacture a coating film (step 202: application process). The method of performing the application is not particularly limited, but an application method of a die method or a microgravure method may be performed. In addition, a method of manufacturing a film-like body of a uniform thickness by titrating and rotating an application solution and using centrifugal force may also be adopted. The application solution may be coated in a warming state.

Specifically, the application solution of the anti-glare layer 16 is applied (coated) on the substrate 15, and the coating film that is the basis of the anti-glare layer 16 is manufactured.

In addition, the application solution of the low refractive index layer 17 is applied (coated) on the anti-glare layer 16, and the coating film that is the basis of the anti-glare layer 17 is manufactured. Here, in the anti-glare layer 16, the protrusion 16b from which scattering particles 162 protrude are formed in some areas, and portions other than the protrusions 16b are the flat portion 16a having a flat surface. This makes it possible to uniformly apply the application solution of the low refractive index layer 17 to the flat portion 16a of the anti-glare layer 16.

Next, the applied coating film is dried (step 203: drying process). The drying may be performed by a method of leaving the solvent at room temperature to volatilize the solvent, or a method of forcibly removing the solvent by heating, vacuuming, or the like.

Next, energy such as ultraviolet rays or heat is irradiated to the coating film, and the binder component in the coating film is photopolymerized (step 204: photopolymerization process). As a result, the binder component in the coating film is hardened and becomes the binder 161 of the anti-glare layer 16 and the binder 171 of the low refractive index layer 17.

Due to the above process, each layer of the anti-glare layer 16 and the low refractive index layer 17 may be manufactured. In addition, the drying process and the photopolymerization process can be recognized as a hardening process that hardens the applied application solution.

As described above, in the anti-reflection film 10 of this embodiment, the anti-glare layer 16 has the flat portion 16a having a flat surface shape, and the protrusion 16b formed by a portion of the scattering particles 162 protruding from the surface of the flat portion 16a. In the protrusion 16b, the irregularities 163 originating from the scattering particles 162 are formed.

By having this configuration, the anti-glare properties of the anti-reflection film 10 may be improved due to the action of the anti-glare layer 16. In addition, it is possible to suppress the decrease in the coatability of the low refractive index layer 17 to the anti-glare layer 16 and increase the clarity of the image displayed on the liquid crystal panel 1a due to the action of the low refractive index layer 17.

In addition, in the above-described example, the protrusion 16b of the anti-glare layer 16 is formed by a portion of the scattering particles 162 protruding from the surface of the binder 161, but is not limited to thereto. For example, when the anti-glare layer 16 does not have the scattering particles 162, the binder 161 includes the flat portion 16a and the protrusion 16b that protrudes from the flat portion 16a and has an uneven shape formed on the surface thereof. In this case, the anti-glare layer 16 has a ratio (area of the flat portion 16a/area of the protrusion 16b) of the area of the flat portion 16a to the area of the protrusion 16b of 2.0 or more and 30 or less, and the surface roughness of the protrusion 16b just needs to be larger than the surface roughness of the flat portion 16a.

Such an anti-glare layer 16 may be processed and manufactured by, for example, a technology of imprinting the resin constituting the binder 161 using a mold having portions corresponding to the flat portion 16a and the protrusion 16b.

In addition, in the above-described example, the anti-reflection film 10 had the layer structure in which the anti-glare layer 16 and the low refractive index layer 17 were stacked on the substrate 15, but the anti-reflection film 10 may not necessarily have the substrate 15.

In addition, in the above-described example, the display device 1 illustrates the case where the anti-glare layer 16 and the low refractive index layer 17 are formed on the liquid crystal panel 1a. However, it is not limited thereto, and may be formed in, for example, organic EL or a cathode ray tube.

In addition, these layers may be formed on the surface of the lens or the like made of a material such as glass or plastic. In this case, the lens or the like is an example of the substrate. In addition, the lens or the like in which the anti-glare layer 16 and the low refractive index layer 17 are formed is an example of the optical member.

### Examples

Hereinafter, the present disclosure will be described in more detail using examples. The present disclosure is not limited to these examples as long as it does not depart from the gist of the present disclosure.

### [Manufacturing of Anti-Glare Layer 16]

First, the method of manufacturing a anti-glare layer 16 will be described. Here, application solutions A-1 to A-21, which are the basis for the anti-glare layer 16, were manufactured with the compositions shown in Tables 1 to 3.

### (Application Solution A-1)

Application solution A-1 includes the binder component and the hollow scattering particles 162 that are the basis of the binder 162. In addition, the application solution A-1 includes a photopolymerization initiator, a surface modifier, an anti-foaming agent, and a solvent.

As the binder component, UA-306H manufactured by KYOEISHA CHEMICAL Co., Ltd., and KAYARAD PET-30 manufactured by Nippon Kayaku Co., Ltd., were used. In addition, as the scattering particles 162, Techpolymer MBP series (PMMA particles having irregularities on the surface: Average particle size: 4 µm, refractive index: 1.49, specific surface area: 110 m²/g) manufactured by Sekisui Kasei Co., Ltd., was used. In addition, as the photopolymerization initiator, IRGACURE 184 manufactured by BASF Japan Ltd., was used. In addition, as the leveling agent, MEGAFAC F-556 manufactured by DIC Corporation was used. In addition, as the anti-foaming agent, BYK-066N manufactured by ALTANA Corporation was used. These are the solid contents of the application solution A-1, and the mixing ratio (mass mixing ratio) is as shown in Table 1.

Then, these solid contents were added to a mixed solution of toluene and isopropyl alcohol as a solvent, and stirred for 5 minutes using a homogenizer to obtain the application solution A-1. In this case, the solid content concentration of the obtained application solution A-1 was set to 50 mass%. The mixing ratio of the solvent is as shown in Table 1.

### (Application Solution A-2)

Application solution A-2 was obtained in the same manner as the application solution A-1, except that POMP605 (nylon particles having irregularities on the surface. Average particle size: 5 µm, refractive index: 1.54, specific surface area: 230 m²/g) manufactured by UBE Corporation was used as the scattering particles 162.

The mixing ratio of solid content and solvent in the application solution A-2 are as shown in Table 1.

### (Application Solution A-3)

Application solution A-3 was obtained in the same manner as the application solution A-1, except that MR=7CGP (PMMA particles having irregularities on the surface. Average particle size: 7 µm, refractive index: 1.49, specific surface area: 210 m²/g) manufactured by Soken Chemical & Engineering Co., Ltd., was used as the scattering particles 162.

The mixing ratio of solid content and solvent in the application solution A-3 are as shown in Table 1.

### (Application Solution A-4)

Application solution A-4 was obtained in the same manner as the application solution A-1, except that SUNLOVELY (silica particles having irregularities on the surface. Average particle size: 5 µm, refractive index: 1.45, specific surface area: 100 m²/g) manufactured by AGC Si-Tech Co., Ltd., was used as the scattering particles 162.

The mixing ratio of solid content and solvent in the application solution A-4 are as shown in Table 1.

### (Application Solution A-5)

Application solution A-5 was obtained in the same manner as the application solution A-1, except that the mixing ratio of Techpolymer MBP series manufactured by Sekisui Kasei Co, Ltd., used as the scattering particles 162 changed.

The mixing ratio of solid content and solvent in the application solution A-5 are as shown in Table 1.

### (Application Solution A-6)

Application solution A-6 was obtained in the same manner as the application solution A-1, except that the mixing ratio of Techpolymer MBP series manufactured by Sekisui Kasei Co., Ltd., used as the scattering particles 162 changed and Futter Gento FTX-218 manufactured by NEOS COMPANY LIMITED as the leveling agent was used.

The mixing ratio of solid content and solvent in the application solution A-6 are as shown in Table 1.

### (Application Solution A-7)

Application solution A-7 was obtained in the same manner as the application solution A-1, except that UA-306I manufactured by KYOEISHA CHEMICAL Co., Ltd., and KAYARAD PET-30 manufactured by Nippon Kayaku Co., Ltd., were used as the binder component, and Futter Gento FTX-218 manufactured by NEOS COMPANY LIMITED was used as the surface modifier, and a mixed solution of toluene and methyl isobutyl ketone was used as the solvent.

The mixing ratio of solid content and solvent in the application solution A-7 are as shown in Table 1.

### (Application Solution A-8)

Application solution A-8 was obtained in the same manner as the application solution A-1, except that in addition to UA-306H manufactured by KYOEISHA CHEMICAL Co., Ltd., and KAYARAD PET-30 manufactured by Nippon Kayaku Co., Ltd., OGSOL EA-0200 manufactured by Osaka Gas Chemicals Co., Ltd., was used as the binder component, and the anti-foaming agent is not used.

The mixing ratio of solid content and solvent in the application solution A-8 are as shown in Table 2.

### (Application Solution A-9)

Application solution A-9 was obtained in the same manner as the application solution A-1, except that Futter Gento FTX-218 manufactured by NEOS COMPANY LIMITED was used as the leveling agent, and ORGANOSILICASOL PGM-AC-2140Y manufactured by a Nissan Chemical Corporation was added.

The mixing ratio of solid content and solvent in the application solution A-9 are as shown in Table 2.

### (Application Solution A-10)

Application solution A-10 was obtained in the same manner as the application solution A-1, except that the mixing ratio of Techpolymer MBP series manufactured by Sekisui Kasei Co., Ltd., and MR-7GCP manufactured by Soken Chemical & Engineering Co., Ltd., were used as the scattering particles 162 and Futter Gento FTX-218 manufactured by NEOS COMPANY LIMITED was used as the leveling agent.

The mixing ratio of solid content and solvent in the application solution A-10 are as shown in Table 2.

### (Application Solution A-11)

Application solution A-11 was obtained in the same manner as the application solution A-1, except that MX=500 (PMMA particles of truth sphere having smooth surface. Average particle size: 5 µm, refractive index: 1.49, specific surface area: 0.6 m²/g) manufactured by Soken Chemical & Engineering Co., Ltd., was used as the scattering particles 162.

The mixing ratio of solid content and solvent in the application solution A-11 are as shown in Table 2.

### (Application Solution A-12)

Application solution A-12 was obtained in the same manner as the application solution A-11, except that the mixing ratio of MX-500 manufactured by Sekisui Kasei Co, Ltd., used as the scattering particles 162 changed.

The mixing ratio of solid content and solvent in the application solution A-12 are as shown in Table 2.

### (Application Solution A-13)

Application solution A-13 was obtained in the same manner as application solution A-1 except that the scattering particles 162 were not used.

The mixing ratio of solid content and solvent in the application solution A-13 are as shown in Table 2.

### (Application Solution A-14)

Application solution A-14 was obtained in the same manner as the application solution A-1, except that ART PEARL TE-812T (porous acrylc/urethane particles. Average particle size: 6 µm, refractive index: 1.52, specific surface area: 55m²/g) manufactured by Negami Chemical Industrial Co.,Ltd., was used as the scattering particles 162.

The mixing ratio of solid content and solvent in the application solution A-14 are as shown in Table 3.

### (Application Solution A-15)

Application solution A-15 was obtained in the same manner as the application solution A-1, except that UA-306I manufactured by KYOEISHA CHEMICAL Co., Ltd., and KAYARAD PET-30 manufactured by Nippon Kayaku Co., Ltd., are used as the binder component, NH-RAS06 (silicon/aluminum oxide particles having irregularities on the surface. Average particle size: 6 µm, refractive index: 1.43 to 1.50, specific surface area: 70 m²/g) manufactured by NIKKO RICA CORPORATION was used as the scattering particles 162, and a mixed solution of 1-Methoxy-2-propanol and cyclohexanone was used as the solvent.

The mixing ratio of solid content and solvent in the application solution A-15 are as shown in Table 3.

### (Application Solution A-16)

Application solution A-16 was obtained in the same manner as the application solution A-1, except that Silcrusta MKN03 (silicon/PMMA particles having irregularities on the surface. Average particle size: 3 µm, refractive index: 1.43 to 1.50, specific surface area: 90 m²/g) manufactured by NIKKO RICA CORPORATION was used as the scattering particles 162, and a mixed solution of 1-Methoxy-2-propanol and cyclohexanone was used as the solvent.

The mixing ratio of solid content and solvent in the application solution A-16 are as shown in Table 3.

### (Application Solution A-17)

Application solution A-17 was obtained in the same manner as the application solution A-1, except that NH-RAS06 manufactured by NIKKO RICA CORPORATION and Silcrusta MKN03 manufactured by NIKKO RICA CORPORATION were used as the scattering particles 162, and a mixed solution of methyl isobutyl ketone, 1-Methoxy-2-propanol, and cyclohexanone was used as the solvent.

The mixing ratio of solid content and solvent in the application solution A-17 are as shown in Table 3.

### (Application Solution A-18)

Application solution A-18 was obtained in the same manner as the application solution A-1, except that Silcrush A3 500 (silicon particles having irregularities on the surface. Average particle size: 3.7 µm, refractive index: 1.42, specific surface area: 50 m²/g) manufactured by NIKKO RICA CORPORATION was used as the scattering particles 162, and a mixed solution of methyl isobutyl ketone, 1-Methoxy-2-propanol, and cyclohexanone was used as the solvent, and the anti-foaming agent is not used.

The mixing ratio of solid content and solvent in the application solution A-18 are as shown in Table 3.

### (Application Solution A-19)

Application solution A-19 was obtained in the same manner as the application solution A-1, except that Silcrusta MKN03 manufactured by NIKKO RICA CORPORATION was used as the scattering particles 162, ORGANOSILICASOL PGM-AC-2140Y manufactured by Nissan Chemical Corporation was added, and a mixed solution of methyl isobutyl ketone, 1-Methoxy-2-propanol, and cyclohexanone was used as the solvent.

The mixing ratio of solid content and solvent in the application solution A-19 are as shown in Table 3.

### (Application Solution A-20)

Application solution A-20 was obtained in the same manner as the application solution A-1, except that ART PEARL TE-812T manufactured by Negami Chemical Industrial Co., Ltd., was used as the scattering particles 162, and SX-130H (monodisperse polystyrene particles. Average particle size: 1.3 µm) manufactured by Soken Chemical & Engineering Co., Ltd., was used as particles other than the scattering particles 162, and a mixed solution of methyl isobutyl ketone and 1-Methoxy-2-propanol was used as the solvent.

The mixing ratio of solid content and solvent in the application solution A-20 are as shown in Table 3.

### (Application Solution A-21)

Application solution A-21 was obtained in the same manner as the application solution A-1, except that only UA-306H manufactured by KYOEISHA CHEMICAL Co., LTD was used as the binder component, Silcrusta MKN03 manufactured by NIKKO RICA CORPORATION was used, and SX-130H manufactured by Soken Chemical & Engineering Co., Ltd., was used as particles other than the scattering particles 162.

The mixing ratio of solid content and solvent in the application solution A-21 are as shown in Table 3.

**Table 1**

| Classification | | Material name | A-1 | A-2 | A-3 | A-4 | A-5 | A-6 | A-7 |
|---|---|---|---|---|---|---|---|---|---|
| Solid conte nt | Binder component | UA-306H | 65. 75 | 66. 75 | 68. 75 | 67. 75 | 62. 75 | 62. 75 | |
| | | UA-306I | | | | | | | 65. 75 |
| | | OGSOL EA-0200 | | | | | | | |
| | | KAYARAD PET-30 | 25 | 25 | 25 | 25 | 25 | 25 | 25 |
| | Scattering particle | Techpolymer MBP series | 7 | | | | 10 | 15 | 7 |
| | | POMP605 | | 6 | | | | | |
| | | MR-7GCP | | | 4 | | | | |
| | | SUNLOVELY | | | | 5 | | | |
| | | MX-500 | | | | | | | |
| | Photopolymeriz ation initiator | IRGACURE 184 | 2 | 2 | 2 | 2 | 2 | 2 | 2 |
| | Others | MEGAFAC F-556 | 0.2 | 0.2 | 0.2 | 0.2 | 0.2 | | |
| | | Ftergent FTX-218 | | | | | | 0.2 | 0.2 |
| | | ORGANOSILI CASOL PGM-AC-2140Y | | | | | | | |
| | | BYK-066N | 0.0 5 | 0.0 5 | 0.0 5 | 0.0 5 | 0.0 5 | 0.0 5 | 0.0 5 |
| Total | | | 100 | 100 | 100 | 100 | 100 | 102 | 100 |
| Solvent | Toluene | | 80 | 80 | 80 | 80 | 80 | 80 | 80 |
| | Isopropyl alcohol | | 20 | 20 | 20 | 20 | 20 | 20 | |
| | Methyl isobutyl ketone | | | | | | | | 20 |
| Solid content concentration (mass%) | | | 50 | 50 | 50 | 50 | 50 | 50 | 50 |

**Table 2**

| Classification | | Material name | A-8 | A-9 | A-10 | A-11 | A-12 | A-13 |
|---|---|---|---|---|---|---|---|---|
| Solid conten t | Binder component | UA-306H | 59.8 0 | 61.7 5 | 65.7 5 | 65.7 5 | 57.7 5 | 67.7 5 |
| | | UA-306I | | | | | | |
| | | OGSOL EA-0200 | 21 | | | | | |
| | | KAYARAD PET-30 | 10 | 20 | 25 | 25 | 20 | 30 |
| | Scattering particle | Techpolymer MBP series | 7 | 6 | 5 | | | |
| | | POMP605 | | | | | | |
| | | MR-7GCP | | | 2 | | | |
| | | SUNLOVELY | | | | | | |
| | | MX-500 | | | | 7 | 20 | |
| | Photopolymeriza tion initiator | IRGACURE 184 | 2 | 2 | 2 | 2 | 2 | 2 |
| | Others | MEGAFAC F-556 | 0.2 | | | 0.2 | 0.2 | 0.2 |
| | | Ftergent FTX-218 | | 0.2 | 0.2 | | | |
| | | ORGANOSILICA SOL PGM-AC-2140Y | | 10 | | | | |
| | | BYK-066N | | 0.05 | 0.05 | 0.05 | 0.05 | 0.05 |
| Total | | | 100 | 100 | 100 | 100 | 100 | 100 |
| Solvent | | Toluene | 80 | 80 | 80 | 80 | 80 | 80 |
| | | Isopropyl alcohol | 20 | 20 | 20 | 20 | 20 | 20 |
| | | Methyl isobutyl ketone | | | | | | |
| Solid content concentration (mass%) | | | 50 | 50 | 50 | 50 | 50 | 50 |

**Table 3**

| Classification | | Material name | A-14 | A-15 | A-16 | A-17 | A-18 | A-19 | A-20 | A-21 |
|---|---|---|---|---|---|---|---|---|---|---|
| Solid cont ent | Binder component | UA-306H | 72. 75 | | 61. 75 | 62. 75 | 57. 80 | 20. 00 | 50. 00 | 87. 75 |
| | | UA-306I | | 72. 75 | | | | | | |
| | | OGSOL EA-0200 | | | | | | | | |
| | | KAYARAD PET-30 | 20 | 20 | 30 | 25 | 30 | 41. 75 | 31. 75 | |
| | Scattering particle | ART PEARL TE-812T | 5 | | | | | | 6 | |
| | | NH-RAS06 | | 5 | | 5 | | | | |
| | | Silcrusta MKN03 | | | 6 | 5 | | 6 | | 6 |
| | | Silcrush A3 500 | | | | | 10 | | | |
| | Other particles | SX-13OH | | | | | | | 10 | 4 |
| | Photopolymer ization initiator | IRGACURE 184 | 2 | 2 | 2 | 2 | 2 | 2 | | 2 |
| | Others | Megapack F-556 | 0.2 | 0.2 | 0.2 | 0.2 | 0.2 | 0.2 | 0.2 | 0.2 |
| | | Ftergent FTX-218 | | | | | | | | |
| | | ORGANOSIL ICASOL PGM-AC-2140Y | | | | | | 30 | | |
| | | BYK-066N | 0.0 5 | 0.0 5 | 0.0 5 | 0.0 5 | | 0.0 5 | 0.0 5 | 0.0 5 |
| Total | | | 100 | 100 | 100 | 100 | 100 | 102 | 100 | |
| Solvent | Toluene | 80 | | | | | | 50 | 80 | |
| | Isopropyl alcohol | 20 | | | | | | | 20 | |
| | Methyl isobutyl ketone | | | | 80 | 80 | 70 | 30 | | |
| | 1-Methoxy-2-propanol | | 90 | 70 | 15 | 15 | 20 | 20 | | |
| | Cyclohexanon e | | 10 | 30 | 5 | 5 | 10 | | | |
| Solid content concentration (mass%) | | 40 | 40 | 30 | 35 | 35 | 30 | 35 | 35 | |

### [Manufacturing of Low Refractive Index Layer 17]

Next, the method of manufacturing a low refractive index layer 17 will be described. Here, application solutions B-1 and B-2, which are the basis for the low refractive index layer 17, were manufactured with the compositions shown in Table 4.

### (Application Solution B-1)

Application solution B-1 includes a binder component and hollow silica particles 172 that are the basis of the binder 171. In addition, application solution B-1 includes hollow silica particles. In addition, the application solution B-1 includes a photopolymerization initiator, a surface modifier, an anti-foaming agent, and a solvent.

As the binder component, AR-100 manufactured by Daikin Industries, Ltd., and KAYARAD PET-30 manufactured by Nippon Kayaku Co., Ltd., were used. In addition, as the hollow silica particles 172, those having an average particle size of 75 nm were used. In addition, as the hollow silica particles, those having an average particle size of 10 nm were used. In addition, as the photopolymerization initiator, IRGACURE 184 manufactured by BASF Japan Ltd., was used. In addition, as the surface modifier, KY-1203 manufactured by Shin-Etsu Chemical Co., Ltd., MEGAFAC RS-58 manufactured by DIC Corporation, and Futter Gento 650A manufactured by NEOS COMPANY LIMITED were used. In addition, as the anti-foaming agent, BYK-066N manufactured by ALTANA Co., was used. These are the solid contents of application solution B-1, and the mixing ratio is as shown in Table 3.

Then, these solid contents were added to a mixed solution of methyl isobutyl ketone and n-butyl alcohol and stirred for 5 minutes to obtain the application solution B-1. In this case, the solid content concentration of the obtained application solution B-1 was set to 2.5 mass%. The mixing ratio of solvent is as shown in Table 3.

### (Application Solution B-2)

Application solution B-2 was obtained in the same manner as the application solution B-1, except that KAYARAD PET-30 manufactured by Nippon Kayaku Co., Ltd., and NK Ester A-200 manufactured by SHIN-NAKAMURA CHEMICAL CO., LTD., were used as the binder component, those having an average particle size of 60 nm were used as the hollow silica particles 172, IRGACURE 127 manufactured by BASF Japan Ltd., was used as the photopolymerization initiator, KY-1203 manufactured by Shin-Etsu Chemical Co., Ltd., and MEGAFAC RS-90 manufactured by DIC CO., were used as the surface modifier, and a mixed solution of methyl isobutyl ketone and tert-butyl alcohol was used as the solvent.

The mixing ratio of solid content and solvent in the application solution B-2 are as shown in Table 4.

**Table 4**

| Classification | | Material name | B-1 | B-2 |
|---|---|---|---|---|
| Solid content | Binder component | AR-100 | 20 | |
| | | KAYARAD PET-30 | 10 | 23 |
| | | NK ester A-200 | | 15 |
| | Silica particle | Hollow silica particles (average particle size: 75nm) | 47.9 5 | |
| | | Hollow silica particles (average particle size: 60nm) | | 41.9 5 |
| | | Hollow silica particles (average particle size: 10nm) | 9 | 12 |
| | Photopolymerization initiator | IRGACURE 184 | 2 | |
| | | IRGACURE 127 | | 2 |
| | Surface modifier | KY-1203 | 5 | 4 |
| | | MEGAFAC RS-58 | 5 | |
| | | MEGAFAC RS-90 | | 2 |
| | | Ftergent 650A | 1 | |
| | Defoamer | BYK-066N | 0.05 | 0.05 |
| Total | | | 100 | 100 |
| Solvent | | Methyl isobutyl ketone | 50 | 30 |
| | | n-butyl alcohol | 50 | |
| | | Tert-butyl alcohol | | 70 |
| Solid content concentration (mass%) | | | 2.5 | 2.5 |

### [Manufacturing of High Refractive Index Layer 19]

Next, the method of manufacturing a high refractive index layer 19 will be described. Here, application solution C-1, which is the basis for the high refractive index layer 19, was manufactured with the compositions shown in Table 4.

### (Application Solution C-1)

Application solution C-1 includes the binder component and the high refractive index particles which are the basis of the binder. In addition, the application solution C-1 includes a photopolymerization initiator, a surface modifier, and a solvent.

As the binder component, KAYARAD DPHA manufactured by Nippon Kayaku Co., Ltd., was used. In addition, as the high refractive index particles, nanoparticles (average particle size: 10 nm) of zirconia oxide were used. In addition, as the photopolymerization initiator, IRGACURE 184 manufactured by BASF Japan Ltd., was used. These are the solid contents of the application solution C-1, and the mixing ratio is as shown in Table 4.

Then, these solid content was added to methyl isobutyl ketone as a solvent, and stirred for 5 minutes to obtain the application solution. In this case, the solid content concentration of the obtained application solution C-1 was set to 8 mass%.

**Table 5**

| Classification | | Material name | C-1 |
|---|---|---|---|
| Solid content | Binder component | KAYARAD DPHA | 26.8 |
| | Scattering particle | Zirconia oxide particle (average particle size: 10nm) | 70 |
| | Photopolymerizatio n initiator | IRGACURE 184 | 3 |
| | Others | MEGAFAC F-568 | 0.2 |
| Total | | | 100 |
| Solvent | | Methyl isobutyl ketone | 100 |
| Solid content concentration (mass%) | | | 8 |

### [Production of Anti-reflection Film 10]

Next, the anti-reflection film 10 was manufactured using each of the obtained application solutions.

### (Example 1)

Application solution A-1 was coated on the substrate 15 made of PET (Cosmoshine SRF manufactured by TOYOBO CO., LTD., thickness 80 µm) using a wire bar (bar coater). Next, after heating and drying at 90°C for 2 minutes, the application solution A-1 was cured by irradiating ultraviolet rays at an illuminance of 100 mW/cm² for 3 seconds using a high-pressure mercury lamp. As a result, the anti-glare layer 16 having a film thickness of 3.3 µm was formed on the substrate 15.

Next, application solution B-1 was applied onto the obtained anti-glare layer 16 using the wire bar. Next, after heating and drying at 50°C for 3 minutes, the application solution B-1 was cured by irradiating ultraviolet rays at an illuminance of 100 mW/cm² for 3 seconds using a high-pressure mercury lamp in a nitrogen gas environment (oxygen concentration less than 0.1%). As a result, the low refractive index layer 17 having a film thickness of 98 nm was formed on the anti-glare layer 16.

Due to the above, the anti-reflection film 10 was obtained in which the substrate 15, the anti-glare layer 16, and the low refractive index layer 17 were stacked in this order.

### (Example 2)

In the same manner as in Example 1 except that application solution A-2 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 3.8 µm, and the film thickness of the low refractive index layer 17 was 98 nm.

### (Example 3)

In the same manner as in Example 1 except that application solution A-3 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.6 µm, and the film thickness of the low refractive index layer 17 was 98 nm.

### (Example 4)

In the same manner as in Example 1 except that application solution A-4 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.6 µm, and the film thickness of the low refractive index layer 17 was 98 nm.

### (Example 5)

In the same manner as in Example 1 except that the film thickness of the anti-glare layer 16 changes, the anti-glare layer 16 and the low refractive index layer 17 were formed on the substrate 15 to obtain the anti-reflection film 10.

The film thickness of the anti-glare layer 16 in the obtained anti-reflection film 10 was 2.7 µm, and the film thickness of the low refractive index layer 17 was 98 nm.

### (Example 6)

In the same manner as in Example 1 except that the film thickness of the anti-glare layer 16 changes, the anti-glare layer 16 and the low refractive index layer 17 were formed on the substrate 15 to obtain the anti-reflection film 10.

The film thickness of the anti-glare layer 16 in the obtained anti-reflection film 10 was 4.2 µm, and the film thickness of the low refractive index layer 17 was 98 nm.

### (Example 7)

In the same manner as in Example 1 except that application solution A-5 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 5.0 µm, and the film thickness of the low refractive index layer 17 was 98 nm.

### (Example 8)

In the same manner as in Example 1 except that application solution A-6 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 6.0 µm, and the film thickness of the low refractive index layer 17 was 98 nm.

### (Example 9)

In the same manner as in Example 1 except that application solution A-7 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 10)

In the same manner as in Example 1 except that application solution A-8 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 11)

In the same manner as in Example 1 except that application solution A-9 was used to manufacture the anti-glare layer 16 and the application solution B-2 is used to manufacture the low refractive index layer 17, the anti-glare layer 16 and the low refractive index layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 12)

In the same manner as in Example 1 except that application solution A-10 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 13)

Using application solution A-1, the anti-glare layer 16 was manufactured on the substrate 15 in the same manner as in Example 1. Next, using application solution C-1, the high refractive index layer 19 was manufactured on the anti-glare layer 16 in the same manner as the manufacturing of the low refractive index layer 17 in Example 1. Next, using application solution B-1, the anti-glare layer 17 was manufactured on the high refractive index layer 19 in the same manner as in Example 1.

Due to the above, the anti-reflection film 10 was obtained in which the substrate 15, the anti-glare layer 16, the high refractive index layer 19, and the low refractive index layer 17 were stacked in this order. The film thickness of the anti-glare layer 16 in the obtained anti-reflection film 10 was 3.3 µm, and the film thickness of the high refractive index layer 17 was 98 nm.

### (Example 14)

In the same manner as in Example 1 except that application solution A-14 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.3 µm, and the film thickness of the low refractive index layer 17 was 98 nm.

### (Example 15)

In the same manner as in Example 1 except that application solution A-15 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.5 µm, and the film thickness of the low refractive index layer 17 was 98 nm.

### (Example 16)

In the same manner as in Example 1 except that application solution A-16 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 1.8 µm, and the film thickness of the low refractive index layer 17 was 98 nm.

### (Example 17)

In the same manner as in Example 1 except that application solution A-17 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.5 µm, and the film thickness of the low refractive index layer 17 was 98 nm.

### (Example 18)

In the same manner as in Example 1 except that application solution A-18 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 2.3 µm, and the film thickness of the low refractive index layer 17 was 98 nm.

### (Example 19)

In the same manner as in Example 1 except that application solution A-19 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 1.9 µm, and the film thickness of the low refractive index layer 17 was 98 nm.

### (Example 20)

In the same manner as in Example 1 except that application solution A-20 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 4.3 µm, and the film thickness of the low refractive index layer 17 was 98 nm.

### (Example 21)

In the same manner as in Example 1 except that application solution A-21 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 1.9 µm, and the film thickness of the low refractive index layer 17 was 98 nm.

### (Example 22)

In the same manner as in Example 1 except for using a substrate 15 made of PET (Lumirror manufactured by TORAY, thickness 50 µm), the anti-glare layer 16 and the low-refractive-flow layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 23)

In the same manner as in Example 1 except for using a substrate 15 made of TAC (FUJITAC manufactured by FUJIFILM, thickness 60 µm), the anti-glare layer 16 and the low-refractive-flow layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Example 24)

In the same manner as in Example 1 except for using a substrate 15 made of PMMA (OXIS manufactured by Okura Industrial Co., Ltd., thickness 40 µm), the anti-glare layer 16 and the low-refractive-flow layer 17 were formed on the substrate 15 to obtain the anti-reflection film 10.

The film thickness of the anti-glare layer 16 in the obtained anti-reflection film 10 was 3.3 µm, and the film thickness of the low refractive index layer 17 was 98 nm.

### (Comparative Example 1)

In the same manner as in Example 1 except that application solution A-11 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 2.5 µm, and the film thickness of the low refractive index layer 17 was 98 nm.

### (Comparative Example 2)

In the same manner as in Example 1 except that application solution A-12 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 2.5 µm, and the film thickness of the low refractive index layer 17 was 98 nm.

### (Comparative Example 3)

In the same manner as in Example 2 except that the film thickness of the anti-glare layer 16 changes, the anti-glare layer 16 and the low refractive index layer 17 were formed on the substrate 15 to obtain the anti-reflection film 10.

The film thickness of the anti-glare layer 16 in the obtained anti-reflection film 10 was 3.7 µm, and the film thickness of the low refractive index layer 17 was 98 nm.

### (Comparative Example 4)

In the same manner as in Example 1 except that the film thickness of the anti-glare layer 16 changes, the anti-glare layer 16 and the low refractive index layer 17 were formed on the substrate 15 to obtain the anti-reflection film 10.

The film thickness of the anti-glare layer 16 in the obtained anti-reflection film 10 was 6.0 µm, and the film thickness of the low refractive index layer 17 was 98 nm. In addition, in the anti-glare layer 16 of Comparative Example 4, the film thickness of the anti-glare layer 16 was thick, the scattering particles 162 were buried in the binder 161, and the protrusion 16 was not formed.

### (Comparative Example 5)

In the same manner as in Example 1 except that application solution A-13 was used to manufacture the anti-glare layer 16, the anti-glare layer 16 and the low refractive index layer 17 were formed on the substrate 15 to obtain the anti-reflection film 10.

The film thickness of the anti-glare layer 16 in the obtained anti-reflection film 10 was 2.5 µm, and the film thickness of the low refractive index layer 17 was 98 nm.

### [Evaluation Method]

The following items of the anti-reflection film 10 obtained in Examples 1 to 21 and Comparative Examples 1 to 5 were evaluated.

### (Refractive Index of Binder 161 and Scattering Particles 162 in Anti-Glare Layer 16)

The refractive indexes of each of the binder 161 and the scattering particles 162 in the anti-glare layer 16 were measured. Specifically, the refractive indexes of the binder 161 and the scattering particles 162 were measured using an ABBE refractometer (DR-A1) manufactured by ATAGO CO., LTD. In this case, within the same sample, the refractive index was measured at n = 3 points, and the average value was adopted.

### <Film Thickness of Anti-Glare Layer 16>

The film thickness of the anti-glare layer 16 was measured. Specifically, using the scanning electron microscope (SU8600) manufactured by Hitachi High-Tech Corporation, the cross section of the anti-glare layer 16 in the anti-reflection film 10 was observed at 2000 times, and the film thickness of the flat portion 16a formed in the binder 161 was measured. In this case, within the same sample, the film thickness was measured at n = 20 points, and the average value was adopted.

### (Refractive Index and Film Thickness of Low Refractive Index Layer 17 and High Refractive Index Layer 19)

The refractive index and film thickness of the low refractive index layer 17 and the high refractive index layer 19 were measured using spectroscopic ellipsometer (VUV-VASE) manufactured by J. W. Woollam Co., Inc. In this case, within the same sample, the refractive index and the film thickness were measured at n = 3 points, and the average value was adopted.

### (Total Haze Value)

The total haze value of the anti-reflection film 10 was measured based on JIS K7136:2000 using haze meter NDH5000W manufactured by NIPPON DENSHOKU INDUSTRIES CO., LTD. In this case, within the same sample, the total haze value was measured at n = 3 points, and the average value was adopted.

### (Internal Haze Value and External Haze Value)

In the state in which the irregularities 163 formed on the surface of the anti-glare layer 16 are flat by filling a liquid monomer having almost the same refractive index of the anti-glare layer 16, the internal haze value was measured using haze meter NDH5000W manufactured by NIPPON DENSHOKU INDUSTRIES CO., LTD. In this case, within the same sample, the internal haze value was measured at n = 3 points, and the average value was adopted.

In addition, the value obtained by subtracting the internal haze value from the total haze value was taken as the external haze value.

### (Gross Value at Incident Angle of 85°)

The gross value of the anti-reflection film 10 was measured at an incident angle of 85°. Specifically, a black PET film was attached on a back side (substrate 15) of the anti-reflection film 10, and the gross value was measured at an incident angle of 85° from the surface (low refractive index layer 17) side of the anti-reflection film 10 using a gloss meter manufactured by BYK.

### (Area of Flat Portion 16a and Protrusion 16b in Anti-Glare Layer 16)

The areas of the flat portion 16a and the protrusion 16b in the anti-glare layer 16 were measured using a laser microscope VK-X1100 manufactured by KEYENCE CORPORATION. Specifically, shape data of an area of 97 µm × 73 µm on the surface of the anti-glare layer 16 was acquired using an objective lens with a magnification of 150 times. Using the height information in the acquired shape data, the flat portion 16a and the protrusion 16b were distinguished, and the areas of the flat portion 16a and the protrusion 16b, respectively, were calculated.

Then, the ratio of the area of the flat portion 16a to the area of the protrusion 16a (area of flat portion 16a/area of protrusion 16b) was calculated.

### (SCI Reflectance)

The SCI reflectance of the anti-reflection film 10 was measured. Specifically, a black PET film was attached on the back side (substrate 15) of the anti-reflection film 10, and the SCI reflectance of the anti-reflection film 10 was measured using CM-2600d manufactured by KONICA MINOLTA, INC.

The smaller the SCI reflectance of the anti-reflection film 10 is, the more preferably it is, and specifically, it is preferably 1.8% or less.

### (Reflection Evaluation)

The anti-reflection film 10 was attached to a 55-inch display using an adhesive film. In addition, a lamp with an incandescent light bulb was disposed 2 m away from the display at a diagonal angle of 45°. Then, in a state where the image is displayed by turning on the display, the display was observed with the naked eye from a place 1 m away in the front direction of the display, and the reflection of the incandescent light bulb on the display and the visibility of the image displayed on the display were evaluated.

The evaluation was performed based on the following criteria.
A: There is very little reflection of external light, and the visibility of the image is excellent.
B: It was confirmed that external light is slightly reflected, but there is little effect on the visibility of the image.
C: The reflection of external light is noticeable, and the decrease in the visibility of the displayed image is confirmed.
D: The reflection of external light is severe, and the visibility of the image is poor.

The case where the evaluation was A or B was determined as passing, and the case where the evaluation was C or D was determined as failure.

### (Appearance Evaluation)

Under conditions under bright vision, the appearance of the display with the anti-reflection film 10 attached was observed and evaluated with the naked eye. As the display, the same display as that used for the reflection evaluation was used, and the appearance was observed in the state in which the display is not turned on.

The evaluation was performed based on the following criteria.
A: It feels black without gloss.
B: There is a slight feeling of blackness with a glossy feel.
C: A slight haze due to scattered light is felt.
D: A haze due to scattered light is felt.

The case where the evaluation was A or B was determined as passing, and the case where the evaluation was C or D was determined as failure.

### [Evaluation Result]

The evaluation results of the anti-reflection films 10 of Examples 1 to 21 and Comparative Examples 1 to 5 are shown in Tables 6 to 9.

**Table 6**

| | | | Exam ple 1 | Exam ple 2 | Exam ple 3 | Exam ple 4 | Exam ple 5 | Exam ple 6 | Exam ple 7 |
|---|---|---|---|---|---|---|---|---|---|
| Applicat ion solution | Anti-glare layer | | A-1 | A-2 | A-3 | A-4 | A-1 | A-1 | A-5 |
| | High refraction layer | | | | | | | | |
| | Lower refraction layer | | B-1 | B-1 | B-1 | B-1 | B-1 | B-1 | B-1 |
| Film thicknes s | Anti-glare layer (µm) | | 3.3 | 3.8 | 4.6 | 4.1 | 2.7 | 4.2 | 5.0 |
| | High refraction layer (µm) | | | | | | | | |
| | Lower refraction layer (µm) | | 98 | 98 | 98 | 98 | 98 | 98 | 98 |
| Refracti ve index | Ant i-glar e laye r | Binder | 1.51 | 1.51 | 1.51 | 1.51 | 1.51 | 1.51 | 1.51 |
| | | Scatteri ng particle | 1.49 | 1.49 | 1.54 | 1.45 | 1.49 | 1.49 | 1.49 |
| | | Refracti ve differen ce | 0.02 | 0.02 | 0.03 | 0.06 | 0.02 | 0.02 | 0.02 |
| | High refraction layer (µm) | | | | | | | | |
| | Low refraction layer (µm) | | 1.30 | 1.30 | 1.30 | 1.30 | 1.30 | 1.30 | 1.30 |
| Evaluati on result | Total haze value (%) | | 32 | 38 | 31 | 40 | 52 | 21 | 32 |
| | External haze value (%) | | 30 | 32 | 28 | 36 | 49 | 19 | 28 |
| | Internal haze value (%) | | 2 | 6 | 3 | 4 | 3 | 2 | 4 |
| | Gross value (85°) | | 41 | 38 | 44 | 35 | 19 | 56 | 40 |
| | Area of flat portion/area of protrusion | | 9.0 | 12.8 | 14.9 | 12.5 | 7.2 | 12.0 | 3.0 |
| | SCI of anti-reflection film (%) | | 1.00 | 1.05 | 0.98 | 1.11 | 1.19 | 0.89 | 1.13 |
| | Reflection evaluation | | A | A | A | A | A | B | A |
| | Appearance evaluation | | A | A | A | A | A | A | A |

**Table 7**

| | | | Examp le 8 | Examp le 9 | Examp le 10 | Examp le 11 | Examp le 12 | Examp le 13 |
|---|---|---|---|---|---|---|---|---|
| Applicati on solution | Anti-glare layer | | A-6 | A-7 | A-8 | A-9 | A-10 | A-1 |
| | High refraction layer | | | | | | | C-1 |
| | Lower refraction layer | | B-1 | B-1 | B-1 | B-2 | B-1 | B-1 |
| Film thickness | Anti-glare layer (µm) | | 6.0 | 3.3 | 3.3 | 3.0 | 3.3 | 3.3 |
| | High refraction layer (µm) | | | | | | | 145 |
| | Lower refraction layer (µm) | | 98 | 98 | 98 | 98 | 98 | 98 |
| Refractiv e index | Anti - glar e laye r | Binder | 1.50 | 1.50 | 1.55 | 1.51 | 1.51 | 1.51 |
| | | Scatterin g particle | 1.49 | 1.49 | 1.49 | 1.49 | 1.49 | 1.49 |
| | | Refracti ve differenc e | 0.01 | 0.01 | 0.06 | 0.02 | 0.02 | 0.02 |
| | High refraction layer (µm) | | | | | | | 1.72 |
| | Low refraction layer (µm) | | 1.30 | 1.30 | 1.30 | 1.32 | 1.30 | 1.30 |
| Evaluatio n result | Total haze value (%) | | 56 | 31 | 30 | 31 | 41 | 33 |
| | External haze value (%) | | 32 | 30 | 26 | 26 | 38 | 3 |
| | Internal haze value (%) | | 4 | 1 | 4 | 5 | 3 | 30 |
| | Gross value (85°) | | 18 | 43 | 40 | 40 | 34 | 38 |
| | Area of flat portion/area of protrusion | | 1.9 | 9.1 | 9.0 | 8.0 | 8.1 | 8.8 |
| | SCI of anti-reflection film (%) | | 1.51 | 0.99 | 0.95 | 1.19 | 1.05 | 0.86 |
| | Reflection evaluation | | A | A | A | A | A | A |
| | Appearance evaluation | | B | A | A | A | A | A |

**Table 8**

| | | | Exam ple 14 | Exam ple 15 | Exam ple 16 | Exam ple 17 | Exam ple 18 | Exam ple 19 | Exam ple 20 | Exam ple 21 |
|---|---|---|---|---|---|---|---|---|---|---|
| Applic ation solutio n | Anti-glare layer | | A-14 | A-15 | A-16 | A-17 | A-18 | A-19 | A-20 | A-21 |
| | High refraction layer | | C-1 | | | | | | | |
| | Lower refraction layer | | B-1 | B-1 | B-1 | B-2 | B-3 | B-4 | B-5 | B-1 |
| Film thickne ss | Anti-glare layer (µm) | | 4.3 | 4.5 | 1.8 | 4.5 | 2.3 | 1.9 | 4.3 | 1.9 |
| | High refraction layer (µm) | | | | | | | | | |
| | Lower refraction layer (µm) | | 98 | 98 | 98 | 98 | 98 | 98 | 98 | 98 |
| Refract ive index | An tigla re lay er | Binder | 1.52 | 1.53 | 1.52 | 1.51 | 1.52 | 1.49 | 1.52 | 1.52 |
| | | Scatter ing particl e | 1.52 | 1.43 -1.50 | 1.43 -1.50 | 1.43 -1.50 | 1.42 | 1.43 -1.50 | 1.52 | 1.43 -1.50 |
| | | Refrac tive differe nce | 0.00 | 0.03 | 0.02 | 0.01 | 0.10 | 0.01 | 0.02 | 0.02 |
| | High refraction layer (µm) | | | | | | | | | |
| | Low refraction layer (µm) | | 1.30 | 1.30 | 1.30 | 1.30 | 1.30 | 1.30 | 1.30 | 1.30 |
| Evaluat ion result | Total haze value (%) | | 42 | 27 | 27 | 29 | 26 | 24 | 30 | 27 |
| | External haze value (%) | | 40 | 16 | 25 | 7 | 10 | 22 | 3 | 4 |
| | Internal haze value (%) | | 2 | 11 | 2 | 22 | 16 | 2 | 27 | 23 |
| | Gross value (85°) | | 22 | 27 | 39 | 31 | 39 | 38 | 25 | 40 |
| | Area of flat portion/area of protrusion | | 8.8 | 8.8 | 7.8 | 8.5 | 7.5 | 7.9 | 8.8 | 7.9 |
| | SCI of anti-reflection film (%) | | 0.95 | 0.78 | 0.83 | 0.85 | 0.89 | 0.90 | 0.94 | 0.88 |
| | Reflection evaluation | | A | A | A | A | B | A | A | A |
| | Appearance evaluation | | B | A | A | A | A | A | A | A |

**Table 9**

| | | | Comparat ive Example 1 | Comparat ive Example 2 | Comparat ive Example 3 | Comparat ive Example 4 | Comparat ive Example 5 |
|---|---|---|---|---|---|---|---|
| Applicat ion solution | Anti-glare layer | | A-11 | A-12 | A-12 | A-1 | A-13 |
| | High refraction layer | | | | | | |
| | Lower refraction layer | | B-1 | B-1 | B-1 | B-1 | B-1 |
| Film thicknes s | Anti-glare layer (µm) | | 2.5 | 2.5 | 3.7 | 6.0 | 4.0 |
| | High refraction layer (µm) | | | | | | |
| | Lower refraction layer (µm) | | 98 | 98 | 98 | 98 | 98 |
| Refracti ve index | Ant i-glar e laye r | Binder | 1.51 | 1.51 | 1.51 | 1.51 | 1.51 |
| | | Scatteri ng particle | 1.49 | 1.49 | 1.49 | 1.49 | |
| | | Refracti ve differen ce | 0.02 | 0.02 | 0.02 | 0.02 | |
| | High refraction layer (µm) | | | | | | |
| | Low refraction layer (µm) | | 1.30 | 1.30 | 1.30 | 1.30 | 1.30 |
| Evaluati on result | Total haze value (%) | | 19 | 32 | 25 | 7 | 0.50 |
| | External haze value (%) | | 16 | 7 | 7 | 4 | 0.40 |
| | Internal haze value (%) | | 3 | 25 | 18 | 3 | 0.10 |
| | Gross value (85°) | | 90 | 51 | 71 | 99 | 131 |
| | Area of flat portion/area of protrusion | | 9.6 | 1.9 | 4.1 | | |
| | SCI of anti-reflection film (%) | | 1.05 | 1.81 | 1.51 | 0.78 | 0.51 |
| | Reflection evaluation | | C | B | C | D | D |
| | Appearance evaluation | | B | D | C | A | A |

As shown in Tables 6 to 8, in the anti-reflection films 10 of Examples 1 to 21, the results of the reflection evaluation and appearance evaluation were all A or B, and fall within the acceptable range.

On the other hand, the anti-reflection film 10 of Comparative Examples 1 to 3, in which the scattering particles 162 included in the anti-glare layer 16 do not have irregularities on the surface, does not pass at least one of the results of the reflection evaluation and the appearance evaluation.

In addition, the anti-reflection film 10 of Comparative Example 4 in which the film thickness of the anti-glare layer 16 (film thickness of the flat portion 16a) is thick, the scattering particles 162 do not protrude from the binder 161, and the protrusion 16b is not formed passed the appearance evaluation result, but does not pass the reflection evaluation result.

In addition, the anti-reflection film 10 of Comparative Example 5 in which the anti-glare layer 16 does not include the scattering particles 162 passes the appearance evaluation result, but does not pass the reflection evaluation result.

In addition, comparing Examples 1 to 13, it was confirmed that the anti-reflection films 10 of Examples 1 to 5 and 7 to 13, which have a gloss value of 40 or less at an incident angle of 85°, have good reflection evaluation results compared to the anti-reflection film 10 of Example 6 which has a gloss value exceeding 40 at an incident angle of 85°.

In addition, it was confirmed that the anti-reflection films 10 of Examples 1 to 7 and Examples 9 to 13 in which a ratio (area of flat portion 16a/area of protrusion 16b) of the area of the flat portion 16a to the area of the protrusion 16b is 2.0 or more and 30 or less has good reflection evaluation results compared to the anti-reflection film 10 of Example 8 in which a ratio (area of flat portion 16a/area of protrusion 16b) of the area of the flat portion 16a to the area of the protrusion 16b is less than 2.0.

### [Evaluation according to Difference in Substrate 151

The anti-reflection films 10 obtained in Examples 1, 22, and 24 having different substrates 15 performed the evaluation and comparison on the following items.

### (Internal Haze Value of Substrate 15)

The internal haze value in the visible light region of the substrate 15 used in Example 1 and Examples 22 to 24 was measured by Spectral Haze Meter SH7000 manufactured by NIPPON DENSHOKU INDUSTRIES CO., LTD. For the substrate 15 of Example 1 (CosmoShine SRF manufactured by TOYOBO CO., LTD.), the internal haze value was measured at a wavelength of 440 nm in the visible light region. In addition, for the substrate 15 (Lumirror manufactured by TORAY) of Example 22, the substrate 15 (FUJITAC manufactured by FUJIFII,M) of Example 23, and the substrate 15 (OXIS manufactured by Okura Industrial Co., Ltd.) of Example 24, the internal haze value was measured at a wavelength of 380 nm in the visible light region.

### (SCI Reflectance, Reflection Chromaticity (a*/b*))

The SCI reflectance and reflection chromaticity (a*/b*) of the anti-reflection film 10 obtained in Example 1 and Examples 22 to 24 were measured by CM-2600d manufactured by KONICA MINOLTA, INC.

As described above, the smaller the SCI reflectance of the anti-reflection film 10, the more preferably it is. In addition, the smaller the absolute value of the reflection chromaticity (a*/b*) of the anti-reflection film 10, the more preferable it is.

The evaluation results of the anti-reflection film 10 of Example 1 and Examples 22 to 24 are shown in Table 10.

**Table 10**

| | Example 1 | Example 22 | Example 23 | Example 24 |
|---|---|---|---|---|
| Material of substrate | Super reflection PET | PET | TAC | PMMA |
| Internal haze value of substrate (%) | 0.95 | 0.45 | 0.25 | 0.20 |
| SCI of anti-reflection film (%) | 1.00 | 0.88 | 0.78 | 0.74 |
| a*/b* | 3.8/-2.0 | 3.6/-2.0 | 3.1/-2.0 | 3.0/-2.0 |

As shown in Table 10, in the anti-reflection films 10 of Examples 22 to 24 in which the internal haze value in the visible light region of the substrate 15 is 0.5% or less, compared to the anti-reflection film 10 of Example 1, where the internal haze value in the visible light region of the substrate 15 exceeds 0.5%, it was confirmed that the absolute values of specular component include (SCI) and reflected chromaticity (a*/b*) became smaller.

## Claims

1. A resin film, comprising:
an anti-glare layer that includes scattering particles having irregularities formed on surfaces thereof, and a binder made of a resin dispersing the scattering particles; and
a low refractive index layer that is laminated on the anti-glare layer and has a refractive index of 1.40 or less,
wherein the anti-glare layer has a flat portion and a protrusion where the scattering particles protrude from the flat portion.

2. The resin film as claimed in claim 1, wherein when viewed from a direction in which the low refractive index layer is laminated, the anti-glare layer has a ratio (area of the flat portion/area of the protrusion) of an area of the flat portion to an area of the protrusion of 2.0 or more and 30 or less.

3. The resin film as claimed in claim 1, wherein the scattering particle has an average particle size of 1 µm or more and 10 µm or less.

4. The resin film as claimed in claim 3, wherein the scattering particle has a specific surface area calculated by a Brunauer-Emmett-Teller (BET) method of 5 m²/g or more.

5. The resin film as claimed in claim 3, wherein the scattering particle has a particle size of 20 µm or more in a proportion of a particle ratio of 1 mass% or less.

6. The resin film as claimed in claim 1, wherein the scattering particle has a coefficient of variation of a grain-size distribution of 30% or less.

7. The resin film as claimed in claim 1, wherein the scattering particle includes a plurality of particles having different average particle sizes.

8. The resin film as claimed in claim 7, wherein the scattering particle has a difference in average particle size of the plurality of particles of 2.0 µm or less.

9. The resin film as claimed in claim 1, wherein in the anti-glare layer, a difference between a refractive index of the binder and a refractive index of the scattering particle is 0.15 or less.

10. The resin film as claimed in claim 1, wherein in the anti-glare layer, an interface between the binder and the scattering particle is compatible.

11. The resin film as claimed in claim 1, wherein in the anti-glare layer, the binder has a refractive index of 1.50 or more and 1.60 or less.

12. The resin film as claimed in claim 1, wherein in the anti-glare layer, a refractive index of the scattering particle is 1.44 or more and 1.60 or less.

13. The resin film as claimed in claim 1, wherein the scattering particle includes at least one of silica particles, polymethyl methacrylate (PMMA) particles, melamine particles, and acetylcellulose particles.

14. The resin film as claimed in claim 1, wherein the scattering particle includes silicon particles.

15. The resin film as claimed in claim 1, wherein the anti-glare layer further includes nanoparticles having an average particle size of 100 nm or less.
